# EUROPEAN PATENT SPECIFICATION

(11) **EP 3 500 046 B1**
(45) Date of publication and mention of the grant of the patent: **08.05.2024**
(21) Application number: 17838634.8
(22) Date of filing: 03.08.2017
(51) Int. Cl.: H04W 88/04, H04W 76/14, H04W 40/22

(54) **ROUTING METHOD AND EQUIPMENT**
ROUTINGVERFAHREN UND AUSRÜSTUNG
PROCÉDÉ ET DISPOSITIF DE ROUTAGE

(30) Priority: 11.08.2016 CN 201610658687
(43) Date of publication of application: 19.06.2019
(73) Proprietor: ZTE Corporation, Shenzhen, Guangdong 518057 (CN)
(72) Inventor: HUANG, Ying, Shenzhen Guangdong 518057 (CN); CHEN, Lin, Shenzhen Guangdong 518057 (CN); CHEN, Yuqin, Shenzhen Guangdong 518057 (CN); LUO, Wei, Shenzhen Guangdong 518057 (CN)
(74) Representative: Aipex B.V.
(86) International application number: PCT/CN2017/095873
(87) International publication number: WO 2018/028504

(56) References cited:
- WO-A1-2015/125479
- WO-A1-2015/125479
- CN-A- 102 246 552
- CN-A- 106 454 806
- US-A1- 2012 020 278
- US-A1- 2015 230 209
- US-A1- 2016 088 668
- INTEL: "Motivation for SI: Further LTE D2D Enhancements for Wearables and MTC", 3GPP DRAFT; RP-160427 INTEL - FED2D-SLIDES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Göteborg, Sweden; 20160307 - 20160310 1 March 2016 (2016-03-01), XP051657843, Retrieved from the Internet: URL:http://www.3gpp.org/ftp/tsg%5Fran/TSG% 5FRAN/TSGR%5F71/Docs/RP%2D160427%2Ezip [retrieved on 2016-03-01]
- HUAWEI ET AL: "L2 UE Relay technology consideration for wearable", 3GPP DRAFT; R2-162642 L2 RELAY TECHNOLOGY CONSIDERATION FOR WEARABLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Dubrovnik, Croatia; 20160411 - 20160415 2 April 2016 (2016-04-02), XP051082482, Retrieved from the Internet: URL:http://www.3gpp.org/ftp/tsg_ran/WG2_RL 2/TSGR2_93bis/Docs/ [retrieved on 2016-04-02]
- FUJITSU: "Multiplexing for Un Interface", 3GPP DRAFT; R2-101454 - MULTIPLEXING FOR UN INTERFACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 16 February 2010 (2010-02-16), XP050421827, [retrieved on 2010-02-16]
- ZTE CORPORATION: "Priority in UE-to-Network relay", 3GPP DRAFT; R2-153770 - PRIORITY IN UE TO NW RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, P.R.China; 20150824 - 20150828 23 August 2015 (2015-08-23), XP051004415, Retrieved from the Internet: URL:http://www.3gpp.org/ftp/Meetings_3GPP_ SYNC/RAN2/Docs/ [retrieved on 2015-08-23]
- '3rd Generation Partnership Project. 3rd Generation Partnership Project; Technical Specification Group Services and System Aspects; Proximity-based services (ProSe); Stage 2 (Release 13' 3GPPTS 23.303 V13.4. 0. 30 June 2016, page 11, XP051115834
- ZTE: 'Discussion on layer 2 ProSe UE-to-network relay for feD2D' R2-168147 3GPP TSG-RAN WG2 MEETING #96 18 November 2016, XP051177834

## Description

### TECHNICAL FIELD

The present disclosure relates to, but is not limited to, wireless communications and, in particular, to a routing method and equipment.

### BACKGROUND

With the development of wireless multimedia services, people's demand for high data rates and user experience is increasing, which puts high requirements for the system capacity and coverage of traditional cellular networks. In another aspect, the popularity of applications such as social networks, near field data sharing, and local advertising has led to an increasing demand for understanding and communicating (Proximity Services) with nearby people or things in which they are interested. Conventional cell-based cellular networks have significant limitations in supporting high data rates and proximity services. Under this background, the device-to-device (D2D) technology representing a new direction of future communication technologies has emerged. The application of the D2D technology may reduce the burden of cellular networks, reduce the battery power consumption of the user equipment, increase the data rate, and improve the robustness of the network infrastructure, which satisfies the requirements for high data rate services and proximity services.

The D2D technology may work in licensed frequency bands or unlicensed frequency bands, and allows multiple UEs supporting D2D functions, that is, D2D user equipment (D2D UE), to perform direct discovery/direct communication with the network infrastructure or without the network infrastructure. The D2D technology generally includes D2D discovery technology and D2D communication technology. The D2D discovery technology refers to the technology for judging/determining whether two or more than two D2D UEs are proximal to each other (for example, the two or more than two D2D UEs are within such a range that they can perform D2D direct communication) or the technology for judging/determining whether a first UE is proximal to a second UE. The D2D communication technology refers to the technology that part or all of the communication data between the D2D UEs may be directly transmitted without the network infrastructure.

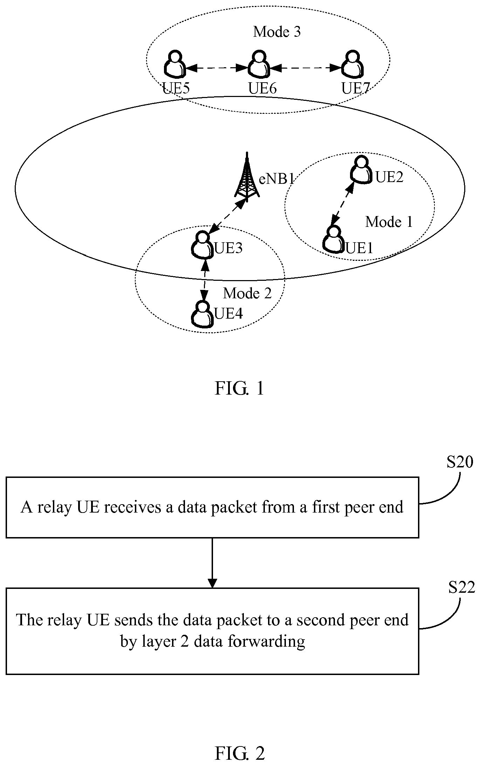

There are three main D2D application scenarios corresponding to the Release 12 standard and the Release 13 standard.
1) The UE 1 and the UE 2 perform data interaction under the coverage of the cellular network, and the user plane data does not pass through the network infrastructure, as shown in Mode 1 in FIG. 1.
2) Relay transmission for a UE in the weak coverage area /outside the coverage area of the cellular network, as in Mode 2 in FIG. 1, the UE 4 with poor signal quality is allowed to communicate with the network through the UE 3 in network coverage, thereby helping the operator to expand coverage.
3) In the event of an earthquake or other emergencies, if the cellular network cannot work properly, direct communication between devices is allowed. As in Mode 3 in FIG. 1, the control plane data transmission and the user plane data transmission between the UE 5, the UE 6 and the UE 7 do not pass through the network infrastructure, while are implemented by one-hop or multi-hop.

In the scenarios 2) and 3) of the R13 standard, the D2D UE may be used as the relay node, such that the remote D2D UE at the edge of cellular network coverage or out of the cellular network coverage can perform cellular communication with the network via the relay nodes, and enable D2D UEs to perform D2D communication with each other via the relay node. In the D2D technology of the R13 standard, the D2D UE serving as a relay node (also referred to as the relay UE) performs data forwarding in a layer 3 (i.e., Internet protocol (IP) network layer) according to a destination IP address/port number. In the D2D technology of the R14 standard, in the scenario where a wearable device (for example, a machine type communication (MTC) device or a narrow band Internet of Things (NB-IoT) device) accesses the network via the relay UE, in order to enable the operator (i.e., a core network element mobility management entity (MME) and a base station) to more effectively manage the wearable device (i.e., the remote UE), the relay UE is required to perform data routing and forwarding in layer 2 (below the layer 3 and above the physical layer). However, no method for the relay UE to perform data routing and forwarding in the layer 2 has been provided currently. As a result, the D2D relay function of the relay UE cannot be correctly executed. Further relevant technologies are also known from INTEL: "Motivation for SI: Further LTE D2D Enhancements for Wearables and MTC", 3GPP DRAFT; RP-160427 INTEL - FED2D-SLIDES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. TSG RAN, no. Goteborg, Sweden; 20160307 - 20160310 1 March 2016, XP051657843, which relates to further UE D2D enhancements for wearables and MTC, US 2015/230209 A1 (JACTAT CAROLINE [GB] ET AL) 13 August 2015, which relates to a method for relaying a communication in a network, HUAWEI ET AL: "L2 UE Relay technology consideration for wearable", 3GPP DRAFT; R2-162642 L2 RELAY TECHNOLOGY CONSIDERATION FOR WEARABLE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; F, vol. RAN WG2, no. Dubrovnik, Croatia; 20160411-20160415 2 April 2016, XP051082482, which relates to L2 UE relay technology consideration for wearable, FUJITSU: "Multiplexing for Un Interface", 3GPP DRAFT; R2-101454-MULTIPLEXING FOR UN INTERFACE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. San Francisco, USA; 20100222, 16 February 2010, XP050421827, which relates to multiplexing for Un interface, ZTE CORPORATION: "Priority in UE-to-Network relay", 3GPP DRAFT; R2-153770-PRIORITY IN UE TO NW RELAY, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Beijing, P.R.China; 20150824 - 20150828 23 August 2015, XP051004415, which relates to priority in UE-to-Network relay, US 2012/020278 A1 (MOBERG PETER [SE] ET AL) 26 January 2012, which relates to a method and apparatus for user terminal and bearer identification that reduces the overhead for LTE relaying (layer 2 and layer 3), and WO 2015/125479 A1 (NEC CORP [JP]) 27 August 2015; & US 2019/268953 A1 (LECROART BENOIT [GB] ET AL) 29 August 2019, which relates to a relaying user communication device for facilitating the provision of a communication link for another user communication device.

### SUMMARY

The feature of the method and apparatus according to the present invention are defined in the independent claims. Further improvements are provided in the dependent claims.

The following is a summary of the subject matter described herein in detail. This summary is not intended to limit the scope of the claims.

Embodiment provides of the present invention provide a routing method and equipment, thereby enabling a relay UE to perform layer 2 data routing and forwarding.

The embodiments of the present invention provide a routing method. The method includes:
receiving, by a relay user equipment, UE, a data packet from a remote UE; and sending, by the relay UE, the data packet to a base station by layer 2 data forwarding; wherein the sending, by the relay UE, the data packet to a base station by layer 2 data forwarding comprises: including, by the relay UE, information for identifying the remote UE and a bearer to which the data packet belongs in a relay adaptation layer header of the data packet; wherein before the relay UE sends the data packet to the base station by layer 2 data forwarding, the method further comprises: acquiring, by the relay UE, information for identifying the remote UE to which the data packet belongs, and information for identifying a radio bearer to which the data packet belongs; wherein the relay UE acquires information for identifying the remote UE to which the data packet belongs, and information for identifying a radio bearer to which the data packet belongs in manner of: acquiring information for identifying the remote UE and the bearer to which the data packet belongs, wherein the information is contained in an adaptation layer header of the data packet received from the remote UE; wherein the information for identifying the remote UE and the bearer to which the data packet belongs comprises identification information of the remote UE and bearer identification information; wherein the identification information of the remote UE comprises a new-defined UE identifier,and the bearer identification information comprises a radio bearer identifier.

The embodiments of the present invention provide another routing method. The method includes:
performing, by a remote UE, a layer 2 processing on a data packet to be sent; and sending, by the remote UE, the processed data packet to a relay UE; wherein the performing, by a remote UE, a layer 2 processing on a data packet to be sent comprises: setting, by the remote UE, information for identifying remote UE and a bearer to which the data packet belongs in a relay adaptation layer header added to the data packet; wherein the performing, by a remote UE, a layer 2 processing on a data packet to be sent comprises: performing, by a relay adaptation layer entity within the remote UE, relay adaptation layer processing or data encapsulation; the method further comprising: mapping, by the remote UE, the data packet to a corresponding radio bearer of the remote UE; wherein the mapping, by the remote UE, the data packet to a corresponding radio bearer of the remote UE comprises at least one of: according to identification information for identifying a bearer to which the data packet belongs in a relay adaptation layer of the received data packet, mapping, by the remote UE, the received data packet to the radio bearer of the remote UE corresponding to the identification information; and mapping, by the remote UE, the data packet to a Uu radio bearer corresponding to the PC5 bearer according to a mapping relationship between the Uu radio bearer and the PC 5 bearer in a UE context.

The embodiments of the present invention further provide a terminal. The terminal includes
a first memory, a first processor and a routing program stored in the first memory and executable by the first processor. The routing program, when executed by the first processor, implements the following steps: receiving a data packet from a first peer end; and sending the data packet to a second peer end by layer 2 data forwarding.

The embodiments of the present invention further provide a terminal. The terminal includes
a second memory, a second processor and a routing program stored in the second memory and executable by the second processor. The routing program, when executed by the second processor, implements the following steps: performing a layer 2 processing on a data packet to be sent; and sending the processed data packet.

According to the embodiments of the present invention, a relay UE receives a data packet from a first peer end, and sends the data packet to a second peer end via a layer 2 data forwarding mode. The data packet includes: control plane signaling or user plane data. In the embodiments of the present invention, the method for bearer mapping and layer 2 data forwarding is provided, so that the relay UE correctly performs the layer 2 data routing and forwarding, and the operator may effectively manage and control the remote UE, thereby improving the application of D2D technology.

Other features and advantages of the present invention will be elaborated hereinafter in the description and, moreover, partially become apparent from the description, or will be understood through implementation of the present invention. The object and other advantages of the present invention may be implemented and obtained through structures set forth in the description, claims and drawings.

### BRIEF DESCRIPTION OF DRAWINGS

FIG. 1 is a schematic diagram showing applications of the D2D2 technology in R12/R13;
FIG. 2 is a flowchart 1 of a routing method according to an embodiment of the present invention;
FIG. 3 is a flowchart 2 of a routing method according to an embodiment of the present invention;
FIG. 4 is a flowchart 3 of a routing method according to an embodiment of the present invention;
FIG. 5 is a structural diagram 1 of a relay UE according to an embodiment of the present invention;
FIG. 6 is a structural diagram 2 of a relay UE according to an embodiment of the present invention;
FIG. 7 is a structural diagram 1 of a remote UE according to an embodiment of the present invention;
FIG. 8 is a structural diagram 2 of a remote UE according to an embodiment of the present invention;
FIG. 9 is a structural diagram 1 of a base station according to an embodiment;
FIG. 10 is a structural diagram 2 of a base station according to an embodiment:
FIG. 11 is a structural diagram of a terminal according to an embodiment of the present invention;
FIG. 12 is a structural diagram of another terminal according to an embodiment of the present invention;
FIG. 13 is a schematic diagram 1 of a protocol stack of a method according to an embodiment of the present invention;
FIG. 14 is a schematic diagram 2 of a protocol stack of a method according to an embodiment of the present invention;
FIG. 15 is a schematic diagram 3 of a protocol stack of a method according to an embodiment of the present invention;
FIG. 16 is a schematic diagram 4 of a protocol stack of a method according to an embodiment of the present invention;
FIG. 17 is a schematic diagram 5 of a protocol stack of a method according to an embodiment of the present invention;
FIG. 18 is a schematic diagram 6 of a protocol stack of a method according to an embodiment of the present invention;
FIG. 19 is a schematic diagram 7 of a protocol stack of a method according to an embodiment of the present invention;
FIG. 20 is a schematic diagram 8 of a protocol stack of a method according to an embodiment of the present invention;
FIG. 21 is a schematic diagram 9 of a protocol stack of a method according to an embodiment of the present invention; and
FIG. 22 is a schematic diagram 10 of a protocol stack of a method according to an embodiment of the present invention.

### DETAILED DESCRIPTION

Embodiments of the present application will be described below in detail with reference to the drawings. It is to be noted that if not in collision, the embodiments and features therein in the present invention may be combined with each other.

The steps illustrated in the flowcharts of the drawings may be executed by, for example, a set of computer-executable instructions in a computer system. Moreover, although the flowchart illustrates a logical order of execution, the steps illustrated or described may, in some cases, be executed in an order different from that herein.

FIG. 2 is a flowchart 1 of a routing method according to an embodiment of the present invention. The embodiment corresponds to transmission of uplink data. As shown in FIG. 2, the routing method in the embodiment includes steps described below.

In step S20, a relay user equipment (UE) receives a data packet from a first peer end.

The data packet may be: control plane signaling or user plane data.

In step S22, the relay UE sends the data packet to a second peer end in a layer 2 data forwarding mode.

Through the implementation of the embodiment, the method for bearer mapping and layer 2 data forwarding is provided, so that the relay UE can correctly perform the layer 2 data routing and forwarding, and the operator may effectively manage and control the remote UE, thereby improving the application of D2D technology.

In an exemplary embodiment, the first peer end may include a remote UE, and the second peer end may include a base station. Alternatively, the first peer end may include the base station, and the second peer end may include the remote UE.

In an exemplary embodiment, the first peer end is the remote UE. Correspondingly, before the relay UE receives the data packet from the first peer end, the method may further include that:
The remote UE performs layer 2 processing on the data packet, and sends the data packet to the relay UE.

In the embodiment, the layer 2 processing performed on the data packet by the remote UE may include one of or any combination of the followings.

A Uu interface packet data convergence protocol (PDCP) entity within the remote UE performs PDCP layer processing or data encapsulation.

A Uu interface radio link control (RLC) entity within the remote UE performs RLC layer processing or data encapsulation.

A relay adaptation layer entity within the remote UE performs relay adaptation layer processing or data encapsulation.

A PC5 PDCP layer entity within the remote UE performs PC5 PDCP layer processing or data encapsulation.

APC5 RLC layer entity within the remote UE performs PC5 RLC layer processing or data encapsulation.

A PC5 media access control (MAC) layer entity within the remote UE performs PC5 MAC layer processing or data encapsulation.

In the embodiment, the PDCP layer processing or data encapsulation by the Uu interface PDCP entity within the remote UE or the relay adaptation layer processing or data encapsulation by the adaptation layer entity within the remote UE may include at least one of the following operations.

The remote UE configures information for identifying at least one of the remote UE and a bearer to which the data packet belongs in a Uu PDCP header added for the data packet or in a relay adaptation layer header added for the data packet.

The remote UE configures type indication information for indicating that the data packet is layer 2 relayed or forwarded by the relay UE in the Uu PDCP header added for the data packet or in the relay adaptation layer header added for the data packet. For example, a service data unit (SDU) type field in the packet header is used for indicating the type indication information.

In the embodiment, the layer 2 processing performed on the data packet by the remote UE may include one of or a combination of the followings.

The remote UE configures information for identifying at least one of the remote UE and the bearer to which the data packet belongs in the Uu PDCP header, or the relay adaptation layer header, or the PC5 PDCP header, or the PC5 RLC header or the PC5 MAC header added for the data packet.

The remote UE configures type indication information for indicating that the data packet is a layer 2 relayed data packet or a data packet forwarded by the relay UE in the Uu PDCP header, or the relay adaptation layer header, or the PC5 PDCP header, or the PC5 RLC header or the PC5 MAC header added for the data packet.

The remote UE, PC5 PDCP layer does not perform the encryption processing on the data packet.

The remote UE performs PC5 RLC layer acknowledged (AM) mode processing on the data packet.

In the embodiment, the process that the remote UE performs the layer 2 processing on the data packet and sends the data packet to the relay UE may include that:
the remote UE maps the data packet to a PC5 bearer or a PC5 logical channel, and sends the data packet to the relay UE over the PC5 bearer or the PC5 logical channel.

In the embodiment, the step of mapping, by the remote UE, the data packet to a PC5 bearer or a PC5 logical channel may include that:
according to a QoS class identifier (QCI) of an evolved packet system (EPS) bearer to which the data packet belongs and a mapping relationship between the QCI and the ProSe per-packet priority (PPPP), the remote UE maps the data packet to the PC5 bearer or the PC5 logical channel corresponding to the PPPP corresponding to the QCI of the EPS bearer to which the data packet belongs.

Alternatively, the remote UE maps the data packet to the PC5 bearer or the PC5 logical channel corresponding to a PC5 interface QCI according to the QCI of the EPS bearer to which the data packet belongs and the mapping relationship between a Uu interface QCI and the PC5 interface QCI.

Alternatively, the remote UE maps the data packet to the PC5 bearer or the PC5 logical channel corresponding to the QCI of the EPS bearer to which the data packet belongs according to the QCI of the EPS bearer to which the data packet belongs.

Alternatively, the remote UE maps the data packet to the PC5 bearer or the PC5 logical channel dedicated for forwarding data.

Alternatively, the remote UE maps the data packet to the PC5 bearer or the PC5 logical channel corresponding to the EPS bearer to which the data packet belongs.

In the embodiment, the subsequent layer 2 processing performed by the remote UE may include that:
a PC5 PDCP layer entity, a PC5 RLC layer entity, a PC5 MAC layer entity of the remote UE perform respectively PC5 PDCP layer processing or data encapsulation, PC5 RLC layer processing or data encapsulation and PC5 MAC layer processing or data encapsulation; or
the PC5 RLC layer entity and the PC5 MAC layer entity of the remote UE perform respectively PC5 RLC layer processing or data encapsulation and PC5 MAC layer processing or data encapsulation.

In the embodiment, the layer 2 processing performed on the data packet by the remote UE may include one of or a combination of:
omitting, by the remote UE, PC5 PDCP layer encryption processing on the data packet;
performing, by the remote UE, PC5 RLC layer acknowledged (AM) mode processing on the data packet;
configuring, by the remote UE, type indication information for indicating that the data packet is a layer 2 relayed data packet or a data packet forwarded via the relay UE in one of the header PC5 PDCP, the PC5 RLC header and the PC5 MAC header added for the data packet; and
configuring, by the remote UE, information for identifying at least one of the remote UE and the bearer to which the data packet belongs in one of the PC5 PDCP header added for the data packet, the PC5 RLC header added for the data packet, and the PC5 MAC header added for the data packet.

In the embodiment, the information for identifying at least one of the remote UE and the bearer to which the data packet belongs may include: at least one of identification information of the remote UE and bearer identification information.

The identification information of the remote UE includes one of or a combination of: a cell-radio network temporary identity (C-RNTI), a device-to-device (D2D) layer 2 identifier of the remote UE, an adaptation layer identifier (eNB UE X2 AP ID) of an X2 interface between the base station and a UE, an adaptation layer identifier (eNB UE S1 AP ID) of an S1 interface between the base station and the UE, an index value of an identifier of the remote UE, and a new-defined UE identifier. The bearer identification information includes one of or a combination of: an EPS bearer identifier, a radio bearer identifier, an evolved-radio access bearer (E-RAB) identifier, an S1 bearer identifier, a logical channel identify (LCID), a new-defined bearer identifier, and control plane signaling type indication information or user plane data type indication information.

Alternatively, the information for identifying at least one of the remote UE and the bearer to which the data packet belongs comprises information for identifying a combination of the remote UE and the bearer, such as a tunnel endpoint identifier (TEID), where the bearer is a radio bearer, an S 1 bearer or an EPS bearer of the remote UE.

In the embodiment, the step where the relay UE sends the data packet to the base station via the layer 2 data forwarding mode may include that:
the relay UE sends the data packet received from the remote UE to the base station via a bearer of the relay UE.

In the embodiment, the step where the relay UE sends the data packet to the base station via the layer 2 data forwarding mode may include that:
the relay UE maps the to-be-forwarded data packet sent by the remote UE to a packet data network (PDN) connection or bearer of the relay UE, where the PDN connection or bearer is dedicated for forwarding data; or
the relay UE maps the data packet to the bearer of the relay UE corresponding to the QCI corresponding to a PPPP value of the PC5 bearer or PC5 logical channel corresponding to the data packet according to the PPPP value of the PC5 bearer or PC5 logical channel corresponding to the data packet and a correspondence between the PPPP and the QCI; or
the relay UE maps the data packet to the bearer of the relay UE corresponding to the QCI of the PC5 bearer or PC5 logical channel corresponding to the data packet according to the QCI value of the PC5 bearer or PC5 logical channel corresponding to the data packet.

In the embodiment, the step where the relay UE sends the data packet to the base station via the layer 2 data forwarding mode may include that:
the relay UE performs a PC5 interface layer 2 parsing on the data packet received from the remote UE, and performs Uu interface layer 2 processing or encapsulation.

The PC5 interface layer 2 includes one of or a combination of:
a PC5 MAC layer, a PC5 RLC layer, a PC5 PDCP layer, and a relay adaptation layer.

The Uu interface layer 2 includes one of or a combination of:
a Uu MAC layer, a Uu RLC layer, a Uu PDCP layer, and the relay adaptation layer.

In the embodiment, the Uu interface layer 2 processing or encapsulation performed by the relay UE may include at least one of the following operations.

The relay UE adds information for identifying at least one of the remote UE and the bearer to which the data packet belongs into the Uu PDCP header layer of the data packet, the Uu RLC layer header of the data packet, the Uu MAC header layer of the data packet, or the relay adaptation layer header of the data packet, or in a subheader of a Uu MAC layer MAC protocol data unit (PDU) header.

The relay UE adds type indication information for indicating that the data packet is a layer 2 relayed data packet or a data packet forwarded via the relay UE into the Uu PDCP header layer of the data packet, the Uu RLC layer header of the data packet, the Uu MAC header layer of the data packet, or the relay adaptation layer header of the data packet.

In the embodiment, before the relay UE performs Uu interface layer 2 processing or encapsulation, the method may further include the following step.

The relay UE acquires at least one of: information for identifying the remote UE sends the data packet, and information for identifying the EPS bearer, or the radio bearer, or the S 1 bearer to which the data packet belongs.

In the embodiment, the relay UE acquires at least one of: information for identifying the remote UE which sends the data packet, and information for identifying the EPS bearer, the radio bearer or the S1 bearer over which the data packet is send in one of or a combination of the following manners.

The relay UE acquires information for identifying at least one of the remote UE and the bearer to which the data packet belongs, where the information is contained in the PC5 PDCP header layer of the data packet received from the remote UE, or the PC5 RLC header layer of the data packet, or the PC5 MAC header layer of the data packet, or an adaptation layer header of the data packet received from the remote UE.

The relay UE acquires information for identifying the remote UE to which the data packet belongs from a source ProSe layer 2 identifier (ID) in a PC5 interface MAC layer subheader of the data packet received from the remote UE.

The relay UE acquires at least one of the Uu radio bearer to which the data packet belongs, the EPS bearer to which the data packet belongs and the S1 bearer to which the data packet belongs according to a logical channel identify in the PC5 interface MAC layer subheader of the data packet received from the remote UE as well as a mapping relationship between at least one of the PC5 bearer and the logical channel and at least one of the Uu radio bearer, the EPS bearer and the S1 bearer.

In the embodiment, after the relay UE sends the data packet to the base station via the layer 2 data forwarding mode, the method may further include at least one of the following steps.

The base station acquires type indication information for indicating that the data packet is the layer 2 relayed data packet or a data packet forwarded via the relay UE, where the type indication information is contained in at least one of the Uu PDCP header of the received data packet, the Uu RLC header of the received data packet, the relay adaptation layer header of the received data packet, the PC5 PDCP header of the received data packet, the PC5 RLC header of the received data packet and the PC5 MAC header of the received data packet.

The base station acquires information for identifying at least one of the remote UE and the bearer to which the data packet belongs, where the information is contained in at least one of the Uu PDCP header of the received data packet, the Uu RLC header of the received data packet, the relay adaptation layer header of the received data packet, the PC5 PDCP header of the received data packet, the PC5 RLC header of the received data packet, and the PC5 MAC header of the received data packet.

According to the information for identifying at least one of the remote UE and a bearer to which the data packet belongs, the base station maps the data packet to a bearer corresponding to the remote UE identified by the information, and delivers the data packet to at least one of a Uu PDCP reception entity and a Uu RLC reception entity of the bearer corresponding to the corresponding remote UE.

In the present embodiment, after the relay UE sends the data packet to the base station via the layer 2 data forwarding mode, the method may further include that:
the base station sends the data packet to a core network element, where the core network element is a service gateway (SGW) or a mobility management entity (MME); or
the base station terminates and processes locally the data packet.

In another embodiment, the first peer end is the base station. Correspondingly, before the relay UE receives the data packet from the base station, the method may further include the following step.

The base station performs layer 2 processing on the data packet, and sends the data packet to the relay UE.

In this embodiment, before the base station performs the layer 2 processing on the data packet and sends the data packet to the relay UE, the method may further include the following step.

The base station receives the data packet which needs to be sent to a remote UE from the core network element, where the core network element is an SGW or an MME.

Alternatively, the base station generates the data packet which needs to be sent to the remote UE.

In the embodiment, the step where the base station performs the layer 2 processing on the data packet and sends the data packet to the relay UE may include the following step.

The base station performs layer 2 processing or data encapsulation on the data packet which needs to be sent to the remote UE in at least one of following modes.

AUu interface PDCP entity within the base station corresponding to the remote UE performs Uu PDCP layer processing or data encapsulation on the data packet.

A Uu interface RLC entity within the base station corresponding to the remote UE performs RLC layer processing or data encapsulation on the data packet.

A relay adaptation layer entity within the base station corresponding to the remote UE performs relay adaptation layer processing or data encapsulation on the data packet;

A Uu PDCP layer entity within the base station corresponding to the relay UE performs Uu PDCP layer processing or data encapsulation on the data packet.

A Uu RLC layer entity within the base station corresponding to the relay UE performs Uu RLC layer processing or data encapsulation on the data packet.

A Uu MAC layer entity within the base station corresponding to the relay UE performs Uu MAC layer processing or data encapsulation on the data packet.

In the embodiment, the step where the base station performs layer 2 processing or data encapsulation on the data packet which needs to be sent to the remote UE may include one of or a combination of the following steps.

At least one of the Uu PDCP entity, the Uu RLC entity and the relay adaptation layer entity within the base station corresponding to the remote UE and the Uu PDCP entity, the Uu RLC entity and the Uu MAC entity within the base station corresponding to the relay UE, configures information for identifying at least one of the remote UE and the bearer to which the data packet belongs in at least one of the Uu PDCP header, the Uu RLC header, the Uu MAC header and the relay adaptation layer header added for the data packet.

At least one of the Uu PDCP entity, the Uu RLC entity and the relay adaptation layer entity within the base station corresponding to the remote UE and the Uu PDCP entity, the Uu RLC entity and the Uu MAC entity within the base station corresponding to the relay UE configures the type indication information for indicating that the data packet is a layer 2 relayed data packet or a data packet forwarded via the relay UE in at least one of the Uu PDCP header, the Uu RLC header, the Uu MAC header and the relay adaptation layer header added for the data packet.

In the embodiment, the PDCP layer processing or data encapsulation performed by the Uu interface PDCP entity of the remote UE in the base station or the relay adaptation layer processing or data encapsulation performed by the relay adaptation layer entity of the remote UE in the base station may include at least one of the following steps.

The base station adds information for identifying at least one of the remote UE and the bearer to which the data packet belongs into the Uu PDCP header added to the data packet or the relay adaptation layer header added to the data packet.

The remote UE adds type indication information for indicating that the data packet is a layer 2 relayed data packet or a data packet forwarded via the relay UE in the Uu PDCP header added to the data packet or the relay adaptation layer header added to the data packet.

In the embodiment, the step where the base station performs a layer 2 processing on the data packet, and sends the data packet to the relay UE may include the following step.

The base station maps the data packet which needs to be sent to the remote UE to the Uu radio bearer or logical channel of the relay UE, and sends the data packet to the relay UE via the Uu radio bearer or logical channel of the relay UE.

The step where the base station performs a layer 2 processing on the data packet and sends the data packet to the relay UE may include the following steps.

The base station sends the data packet that needs the layer 2 relay forwarding via the relay UE to the relay UE according to at least one of the relay UE connected with the remote UE determined according to a context of the remote UE, and configuration information for layer 2 relay forwarding via the relay UE.

In the embodiment, the step that the base station maps the data packet which needs to be sent to the remote UE to the bear or the logical channel of the relay UE may include at least one of the following steps.

The base station maps the data packet to a bearer of the relay UE connected with the remote UE according to the QCI of the bearer to which the data packet belongs, where the bearer of the relay UE corresponds to the QCI of the bearer to which the data packet belongs.

The base station maps the data packet to a specific PDN connection or bearer of the relay UE connected with the remote UE, where the specific PDN connection or bearer is dedicated for forwarding data.

In the present embodiment, the step that a layer 2 entity of the bearer or the logical channel within the base station corresponding to the relay UE performs a subsequent layer 2 processing is as follows.

The Uu PDCP layer entity, the Uu RLC layer entity, and the Uu MAC layer entity within the base station corresponding to the relay UE perform respectively Uu PDCP layer processing or data encapsulation, Uu RLC layer processing or data encapsulation, and Uu MAC layer processing or data encapsulation.

Alternatively, the Uu RLC layer entity and the Uu MAC layer entity within the base station corresponding to the relay UE perform respectively Uu RLC layer processing or data encapsulation and Uu MAC layer processing or data encapsulation.

In the embodiment, the step that the Uu PDCP layer entity within the base station corresponding to the relay UE performs the Uu PDCP layer processing or data encapsulation, or the Uu RLC layer entity within the base station corresponding to the relay UE performs the Uu RLC layer processing or data encapsulation is as follows.

The Uu PDCP layer entity or the Uu RLC layer entity within the base station corresponding to the relay UE, respectively configures information for identifying at least one of the remote UE and the bearer to which the data packet belongs in the PDCP header added for the data packet or the RLC header added for the data packet.

The Uu PDCP layer entity or the Uu RLC layer entity within the base station corresponding to the relay UE, respectively configures type indication information for indicating that the data packet is a layer 2 relayed data packet or a data packet forwarded via the relay UE in at least one of the PDCP header added for the data packet and the RLC header added for the data packet.

In the embodiment, the step that the relay UE sends the data packet to the remote UE via the layer 2 data forwarding mode is as follows.

The relay UE parses the received data packet, acquires information for identifying at least one of the remote UE and the bearer to which the data packet belongs. This information is contained in the PDCP header of the data packet, or the RLC header of the data packet, or the MAC header of the data packet or the adaptation layer header of the data packet. The relay UE finds, according to the information, at least one of: a corresponding remote UE and a corresponding bearer or logical channel, where the corresponding remote UE is a target remote UE of the data packet.

The relay UE maps the data packet to a corresponding PC5 bearer or logical channel, and sends the data packet to the corresponding remote UE.

In the embodiment, the step that the relay UE maps the data packet to the corresponding PC5 bearer or logical channel, and sends the data packet to the corresponding remote UE is as follows.

The relay UE maps the data packet to the PC5 bearer or logical channel corresponding to a PPPP corresponding to the QCI of the bearer to which the data packet belongs according to the QCI of the bearer to which the data packet belongs and the mapping relationship between the QCI and the PPPP.

Alternatively, the relay UE maps the data packet to the PC5 bearer or logical channel corresponding to the PC5 QCI according to the QCI of the bearer to which the data packet belongs and the mapping relationship between the Uu QCI and the PC5 QCI.

Alternatively, the relay UE maps the data packet to the PC5 bearer or logical channel corresponding to the QCI of the bearer to which the data packet belongs according to the QCI of the bearer to which the data packet belongs.

Alternatively, the relay UE maps the data packet to the PC5 bearer or logical channel dedicated for forwarding data.

Alternatively, the relay UE maps the data packet to the PC5 bearer or logical channel corresponding to the bearer to which the data packet belongs according to information of the bearer or logical channel to which the data packet belongs.

In the present embodiment, the step that the relay UE sends the data packet to the remote UE via the layer 2 data forwarding mode may include at least one of the following steps.

The relay UE configures information for identifying at least one of the remote UE and the bearer to which the data packet belongs in at least one of the PC5 PDCP header added for the data packet, the PC5 RLC header added for the data packet, the PC5 MAC header added for the data packet, and the relay adaptation layer header added for the data packet.

The relay UE configures type indication information for indicating that the data packet is a layer 2 relayed data packet or a data packet forwarded via the relay UE in at least one of the PC5 PDCP header added for the data packet, the PC5 RLC header added for the data packet, the PC5 MAC header added for the data packet, and the relay adaptation layer header added for the data packet.

In the embodiment, after the relay UE sends the data packet to the remote UE via the layer 2 data forwarding mode, the method may further include the following step.

The remote UE maps the data packet to an EPS bearer of the remote UE, or at least one of the radio bearer and the logical channel (referred to as the radio bearer/the logical channel).

In the embodiment, the step that the remote UE maps the received data packet to the EPS bearer of the remote UE or the radio bearer/the logical channel may include the following step.

According to the information for identifying the bearer to which the data packet belongs in the Uu PDCP header of the received data packet, or the Uu RLC header of the received data packet, or the relay adaptation layer header of the received data packet, or the PC5 PDCP header of the received data packet, or the PC5 MAC header of the received data packet, the remote UE maps the received data packet to the EPS bearer of the remote UE corresponding to the identifying information or the radio bearer/the logical channel of the remote UE corresponding to the identifying information.

Alternatively, according to the QCI value of the PC5 bearer or logical channel to which the data packet belongs, the remote UE maps the data packet to the EPS bearer or the radio bearer/the logical channel corresponding to the QCI value.

Alternatively, according to a PPPP value of the PC5 bearer or logical channel on which the received data packet is sent as well as a correspondence between the PPPP value and the QCI value, the remote UE maps the data packet to the EPS bearer or the radio bearer/logical channel corresponding to the QCI value.

Alternatively, according to a mapping relationship between the EPS/Uu radio bearer and the PC5 bearer/logical channel in a UE context, the remote UE maps the data packet to the EPS bearer or the Uu radio bearer/logical channel corresponding to the PC5 bearer or logical channel.

In the present embodiment, the information for identifying at least one of the remote UE and the bearer to which the data packet belongs may include: at least one of the identification information of the remote UE and the bearer identification information.

The identification information of the remote UE includes one of or a combination of: a C-RNTI, a D2D layer 2 identifier of the remote UE, an eNB UE X2 AP ID, an eNB UE S1 AP ID, an index value of an identifier of the remote UE, and a new-defined UE identifier. The bearer identification information includes one of or a combination of: an EPS bearer identifier, a radio bearer identifier, an E-RAB identifier, an S1 bearer identifier, an LCID, a new-defined bearer identifier, and control plane signaling type indication information or user plane data type indication information.

Alternatively, the information for identifying at least one of the remote UE and the bearer to which the data packet belongs includes information for identifying a combination of the remote UE and a bearer, such as TEID information or other existing or newly-added identification information. The bearer is the radio bearer of the remote UE, or the S1 bearer of the remote UE, or the EPS bearer of the remote UE.

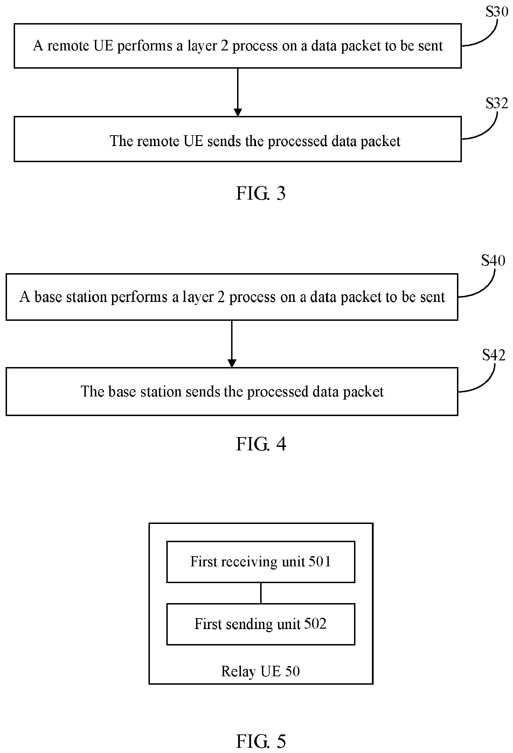

FIG. 3 is a flowchart 2 of a routing method according to an embodiment of the present application. As shown in FIG. 3, the routing method provided by the embodiment includes steps described below.

In step S30, a remote UE performs a layer 2 processing on a data packet to be sent.

In step S32, the remote UE sends the processed data packet.

The data packet includes: control plane signaling or user plane data.

In the present embodiment, the layer 2 processing performed by the remote UE on the data packet to be sent may include one of or a combination of:
performing, by a Uu interface PDCP entity within the remote UE, PDCP layer processing or data encapsulation;
performing, by a Uu interface RLC entity within the remote UE, RLC layer processing or data encapsulation;
performing, by a relay adaptation layer entity within the remote UE, relay adaptation layer processing or data encapsulation;
performing, by a PC5 PDCP layer entity within the remote UE, PC5 PDCP layer processing or data encapsulation;
performing, by a PC5 RLC layer entity within the remote UE, PC5 RLC layer processing or data encapsulation; and
performing, by a PC5 MAC layer entity within the remote UE, PC5 MAC layer processing or data encapsulation.

In the present embodiment, the layer 2 processing performed by the remote UE on the data packet to be sent may include one of or a combination of:
setting, by the remote UE, information for identifying at least one of the remote UE and a bearer to which the data packet belongs in a Uu PDCP header, or a relay adaptation layer header, or a PC5 PDCP header, or a PC5 RLC header, or a PC5 MAC header, where the Uu PDCP header, the relay adaptation layer header, the PC5 PDCP header, the PC5 RLC header, and the PC5 MAC header are added for the data packet;
setting, by the remote UE, type indication information for indicating that the data packet is a layer 2 relayed data packet or a data packet forwarded via a relay UE in the Uu PDCP header added for the data packet, or the relay adaptation layer header added for the data packet, or the PC5 PDCP header added for the data packet, or the PC5 RLC header added for the data packet, or the PC5 MAC header added for the data packet;
not performing, by the remote UE, PC5 PDCP layer encryption processing on the data packet; and
performing, by the remote UE, PC5 RLC layer acknowledgment (AM) mode processing on the data packet.

In the embodiment, the steps that the remote UE performs the layer 2 processing on the data packet and sends the data packet to the relay UE may be as follows.

The remote UE maps the data packet to a PC5 bearer or a PC5 logical channel, and sends the data packet to the relay UE via the PC5 bearer or the PC5 logical channel.

In the embodiment, the step of mapping, by the remote UE, the data packet to a PC5 bearer or a PC5 logical channel may be as follows.

According to a QCI of the bearer to which the data packet belongs and the mapping relationship between QCI and PPPP, the relay UE maps the data packet to the PC5 bearer or the PC5 logical channel corresponding to the PPPP corresponding to the QCI of the bearer to which the data packet belongs.

Alternatively, the remote UE maps the data packet to the PC5 bearer or the PC5 logical channel corresponding to a PC5 interface QCI according to the QCI of the EPS bearer to which the data packet belongs and the mapping relationship between a Uu interface QCI and the PC5 interface QCI.

Alternatively, the remote UE maps the data packet to the PC5 bearer or the PC5 logical channel corresponding to the QCI of the EPS bearer to which the data packet belongs according to the QCI of the EPS bearer to which the data packet belongs.

Alternatively, the remote UE maps the data packet to the PC5 bearer or the PC5 logical channel dedicated for forwarding data.

Alternatively, the remote UE maps the data packet to the PC5 bearer or the PC5 logical channel corresponding to the EPS bearer to which the data packet belongs.

In the present embodiment, the process that the remote UE performs the layer 2 processing on the data packet may include one of or a combination of the following steps.

The remote UE does not perform the PC5 PDCP layer encryption processing on the data packet.

The remote UE performs the PC5 RLC layer acknowledgment (AM) mode processing on the data packet.

The remote UE configures the type indication information for indicating that the data packet is a layer 2 relayed data packet or a data packet forwarded via the relay UE in the PC5 PDCP header added for the data packet, of in the PC5 RLC header added for the data packet, or in the PC5 MAC header added for the data packet.

The remote UE configures information for identifying at least one of the remote UE and the bearer to which the data packet belongs in a PC5 PDCP header added for the data packet, or the PC5 RLC header added for the data packet, or the PC5 MAC header added for the data packet.

The detail of the method in the embodiment is the same as that of the above embodiment, which is not repeated herein.

FIG. 4 is a flowchart 3 of a routing method according to an embodiment of the present application. As shown in FIG. 4, the routing method provided by the embodiment includes steps described below.

In step S40, a base station performs a layer 2 processing on a data packet to be sent.

In step S42, the base station sends the processed data packet.

The data packet includes: control plane signaling or user plane data.

In one embodiment, before the base station performs the layer 2 processing on the data packet to be sent, the method may further include the following step.

The base station receives the data packet which needs to be sent to a remote UE from a core network element, where the core network element is an SGW or an MME.

Alternatively, the base station locally generates the data packet which needs to be sent to the remote UE.

In the embodiment, the layer 2 processing performed on the data packet to be sent by the base station is as follows.

The base station performs the layer 2 processing or data encapsulation on the data packet which needs to be sent to the remote UE in one of or a combination of following modes.

AUu interface PDCP entity within the base station corresponding to the remote UE performs Uu PDCP layer processing or data encapsulation on the data packet.

A Uu interface RLC entity within the base station corresponding to the remote UE performs RLC layer processing or data encapsulation on the data packet.

A relay adaptation layer entity within the base station corresponding to the remote UE performs relay adaptation layer processing or data encapsulation on the data packet.

A Uu PDCP layer entity within the base station corresponding to the relay UE performs Uu PDCP layer processing or data encapsulation on the data packet.

A Uu RLC layer entity within the base station corresponding to the relay UE performs Uu RLC layer processing or data encapsulation on the data packet.

A Uu MAC layer entity within the base station corresponding to the relay UE performs Uu MAC layer processing or data encapsulation on the data packet.

In the embodiment, the layer 2 processing or data encapsulation performed by the base station on the data packet which needs to be sent to the remote UE may include one of or a combination of the following steps.

At least one of the Uu PDCP entity, the Uu RLC entity and the relay adaptation layer entity within the base station corresponding to the remote UE and the Uu PDCP entity, the Uu RLC entity and the Uu MAC entity within the base station corresponding to the relay UE, configures the information for identifying at least one of the remote UE and the bearer to which the data packet belongs in at least one of: the Uu PDCP header, the Uu RLC header, the Uu MAC header and the relay adaptation layer header, where the Uu PDCP header, the Uu RLC header, the Uu MAC header, and the relay adaptation layer header are added for the data packet.

At least one of the Uu PDCP entity, the Uu RLC entity and the relay adaptation layer entity within the base station corresponding to the remote UE and the Uu PDCP entity, the Uu RLC entity and the Uu MAC entity within the base station corresponding to the relay UE, configures the type indication information for indicating that the data packet is a layer 2 relayed data packet or a data packet forwarded via the relay UE in at least one of the Uu PDCP header, the Uu RLC header, the Uu MAC header and the relay adaptation layer header, where the Uu PDCP header, the Uu RLC header, the Uu MAC header, and the relay adaptation layer header are added for the data packet.

In one embodiment, the layer 2 processing performed on the data packet to be sent by the base station is as follows.

The base station maps the data packet which needs to be sent to the remote UE to the Uu radio bearer or logical channel of the relay UE, and sends the data packet to the relay UE via the Uu radio bearer or logical channel of the relay UE.

In one embodiment, the process that the base station maps the data packet which needs to be sent to the remote UE to the Uu radio bear or logical channel of the relay UE may include at least one of the following steps.

The base station maps the data packet to a bearer of the relay UE connected with the remote UE according to the QCI of the bearer to which the data packet belongs, where of the bearer of the relay UE corresponds to the QCI of the bearer to which the data packet belongs.

The base station maps the data packet to a specific PDN connection or bearer of the relay UE connected with the remote UE, where the specific PDN connection or bearer is dedicated for data forwarding.

In the embodiment, the layer 2 processing performed by the base station on the data packet to be sent is as follows.

The base station sends the data packet which needs a layer 2 relay forwarding via a relay UE to the relay UE according to at least one of the following information: a context of the remote UE which indicates the relay UE connected with the remote UE, and configuration information for the layer 2 relay forwarding via the relay UE.

The detail of the method in the embodiment is the same as that of the above embodiment, which is not repeated herein.

In the embodiment, the information for identifying at least one of the remote UE and the bearer to which to-be-sent uplink data belongs may be allocated by the base station or the core network element. In such a way, the operator may easily control the remote UE.

The following describes devices and systems for implementing the above method embodiments. As used below, the term "unit" may be software, hardware or a combination thereof capable of implementing preset functions. The units described in following embodiments may be implemented by software, but implementation by hardware or by a combination of software and hardware may also be possible and conceived.

FIG. 5 is a structural diagram 1 of a relay UE according to an embodiment of the present application. As shown in FIG. 5, the relay UE 50 provided by the embodiment includes a first receiving unit 501 and a first sending unit 502.

The first receiving unit 501 is configured to receive a data packet form a first peer end.

The first sending unit 502 is configured to send the data packet to a second peer end via a layer 2 data forwarding mode.

The data packet includes: control plane signaling or user plane data.

In the embodiment, the first peer end includes a remote UE, and the second peer end includes a base station. Alternatively, the first peer end includes the base station, and the second peer end includes the remote UE.

In the embodiment, the first peer end is the remote UE and the second peer end includes the base station. Correspondingly, the first sending unit 502 may be configured to send the data packet received from the remote UE to the base station via a bearer of the relay UE.

In this embodiment, the first sending unit 502 is configured to send the data packet to the base station via the layer 2 data forwarding mode in one of following modes.

The first sending unit 502 maps the data packet sent by the remote UE and to be forwarded to a PDN connection or bearer of the relay UE, where the PDN connection or bearer is dedicated for forwarding data.

The first sending unit 502 maps the data packet to the bearer of the relay UE corresponding to the QCI corresponding to a PPPP value of a PC5 bearer or PC5 logical channel corresponding to the data packet according to the PPPP value of the PC5 bearer or PC5 logical channel corresponding to the data packet and a correspondence between the PPPP and the QCI .

The first sending unit 502 maps the data packet to the bearer of the relay UE corresponding to the QCI corresponding to the QCI value of the PC5 bearer or logical channel corresponding to the data packet according to the QCI value of the PC5 bearer or logical channel corresponding to the data packet.

In the embodiment, the first sending unit 502 may be configured to perform a PC5 interface layer 2 parse on the data packet received from the remote UE, and then perform Uu interface layer 2 processing or encapsulation on the data packet.

The PC5 interface layer 2 includes one of or a combination of:
PC5 MAC, PC5 RLC, PC5 PDCP, and a relay adaptation layer.

The Uu interface layer 2 includes one of or a combination of:
Uu MAC, Uu RLC, Uu PDCP, and the relay adaptation layer.

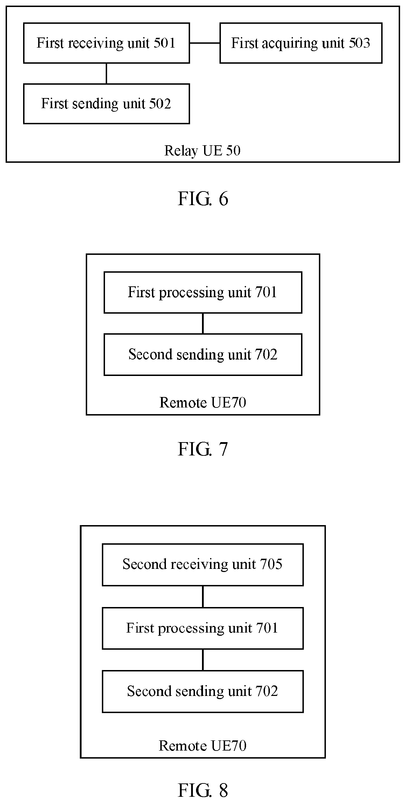

FIG. 6 is a structural diagram 2 of a relay UE according to an embodiment of the present application. As shown in FIG. 6, the relay UE may further include a first acquiring unit 503.

The first acquiring 503 is configured to acquire at least one of: information for identifying the remote UE to which the data packet belongs, and information for identifying an EPS bearer, or a radio bearer, or an S1 bearer to which the data packet belongs.

FIG. 7 is a structural diagram 1 of a remote UE according to an embodiment of the present application. As shown in FIG. 7, the remote UE 70 provided by the embodiment includes a first processing unit 701 and a second sending unit 702.

The first processing unit 701 is configured to performs a layer 2 processing on a data packet to be sent.

The second sending unit 702 is configured to send the processed data packet.

The data packet includes: control plane signaling or user plane data.

In the embodiment, the first processing unit 701 may be configured to perform PDCP layer processing or data encapsulation via a Uu interface PDCP entity within the remote UE; or perform RLC layer processing or data encapsulation via a Uu interface RLC entity within the remote UE; or perform relay adaptation layer processing or data encapsulation via a relay adaptation layer entity within the remote UE; or perform PC5 PDCP layer processing or data encapsulation via a PC5 PDCP layer entity within the remote UE; or perform PC5 RLC layer processing or data encapsulation via a PC5 RLC layer entity within the remote UE; or perform PC5 MAC layer processing or data encapsulation via a PC5 MAC layer entity within the remote UE.

In the embodiment, the first processing unit 701 may be configured to perform PDCP layer processing or data encapsulation via the Uu interface PDCP entity within the remote UE, or perform relay adaptation layer processing or data encapsulation via the relay adaptation layer entity within the remote UE in at least one of following modes.

The first processing unit 701 configures information for identifying at least one of the remote UE and a bearer to which the data packet belongs in the Uu PDCP header added for the data packet or the relay adaptation layer header added for the data packet.

The first processing unit 701 configures type indication information for indicating that the data packet is a layer 2 relayed data packet or a data packet forwarded via a relay UE in the Uu PDCP header added for the data packet or the relay adaptation layer header added for the data packet.

In the embodiment, the first processing unit 701 may be configured to perform the layer 2 processing on the data packet to be sent in the following way.

The first processing unit 701 maps the data packet to a PC5 bearer or a PC5 logical channel, and delivers the data packet to a layer 2 entity of the mapped bearer or the logical channel for subsequent layer 2 processing.

In the embodiment, the first processing unit 701 may be configured to map the data packet to the PC5 bearer or the PC5 logical channel in the following manner.

According to a QCI of an EPS bearer to which the data packet belongs and a mapping relationship between QCI and PPPP, the first processing unit 701 maps the data packet to the PC5 bearer or the PC5 logical channel corresponding to the PPPP.

Alternatively, the first processing unit 701 maps the data packet to the PC5 bearer or the PC5 logical channel corresponding to a QCI according to the QCI of the EPS bearer on which the data packet is sent and a mapping relationship between a Uu QCI and a PC5 QCI.

Alternatively, the first processing unit 701 maps the data packet to the PC5 bearer or the PC5 logical channel corresponding to the QCI according to the QCI of the EPS bearer to which the data packet belongs.

Alternatively, the first processing unit 701 maps the data packet to the PC5 bearer or the PC5 logical channel dedicated for forwarding data.

Alternatively, the first processing unit 701 maps the data packet to the PC5 bearer or the PC5 logical channel corresponding to the EPS bearer to which the data packet belongs.

In the embodiment, the first processing unit 701 may be configured to execute the subsequent layer 2 processing in the following manner.

The first processing unit 701 performs PC5 PDCP layer processing or data encapsulation, PC5 RLC layer processing or data encapsulation, and PC5 MAC layer processing or data encapsulation respectively via the corresponding PC5 PDCP layer entity, the PC5 RLC layer entity and the PC5 MAC layer entity of the remote UE.

Alternatively, the first processing unit 701 performs PC5 RLC layer processing or data encapsulation and PC5 MAC layer processing or data encapsulation respectively via the corresponding PC5 RLC layer entity and the PC5 MAC layer entity of the remote UE.

In the embodiment, the first processing unit 701 may be configured to execute subsequent layer 2 processing in at least one of following modes.

The first processing unit 701 does not perform the PC5 PDCP layer encryption processing on the data packet.

The first processing unit 701 performs the PC5 RLC layer acknowledgment (AM) mode processing on the data packet;
The first processing unit 701 configures the type indication information for indicating that the data packet is a data packet forwarded via the relay UE in the PC5 PDCP header added for the data packet or the PC5 RLC header added for the data packet.

The first processing unit 701 configures the information for identifying at least one of the remote UE and the bearer to which the data packet belongs in the PC5 PDCP header added for the data packet or the PC5 RLC header added for the data packet.

FIG. 8 is a structural diagram 2 of a remote UE according to an embodiment of the present application. As shown in FIG. 8, the remote UE 70 may further include: a second receiving unit 705. The second receiving unit 705 is configured to receive the data packet sent by the relay UE, and map the data packet to an EPS bearer or the radio bearer/the logical channel corresponding to the remote UE.

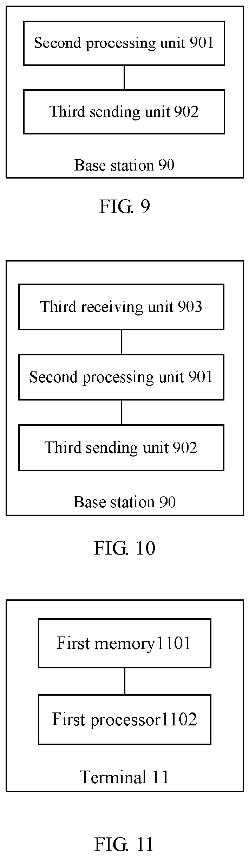

FIG. 9 is a structural diagram 1 of a base station according to an embodiment of the present application This embodiment is not covered by the scope of the granted claims. As shown in FIG. 9, the base station 90 provided by the embodiment includes a second processing unit 901 and a third sending unit 902.

The second processing unit 901 is configured to process a to-be-sent data packet in a layer 2.

The third sending unit 902 is configured to send the processed data packet.

The data packet includes: control plane signaling or user plane data.

FIG. 10 is a structural diagram 2 of a base station according to an embodiment of the present application This embodiment is not covered by the scope of the granted claims. As shown in FIG. 10, the base station 90 may include a third receiving unit 903.

The third receiving unit 903 is configured to receive the data packet which needs to be sent to a remote UE from a core network element, where the core network element is an SGW or an MME; or
produce the data packet which needs to be sent to the remote UE.

In the embodiment, the second processing unit 901 may include a first forwarding sub-unit.

The first forwarding sub-unit is configured to send the data packet performing a layer 2 relay forwarding via the relay UE to the relay UE according to at least one of configuration information of the relay UE connected with the remote UE in a context of the remote UE, and configuration information performing layer 2 relay forwarding via the relay UE.

FIG. 11 is a structural diagram of a terminal according to an embodiment of the present application. As shown in FIG. 11, the terminal 11 provided by the embodiment includes: a first memory 1101, a first processor 1102 and a routing program stored in the first memory 1101 and performed in the first processor 1102. The routing program, when executed by the first processor 1102, implements following steps: receiving a data packet from a first peer end; and sending the data packet to a second peer end via a layer 2 data forwarding mode.

The first peer end is a remote UE, and the second peer end includes a base station. The step of sending the data packet to a second peer end via a layer 2 data forwarding mode may include:
sending the data packet received from the remote UE to the base station via a bearer of a relay UE.

The routing program, when executed by the first processor, further implements a following step:
acquiring at least one of: information for identifying the remote UE to which the data packet belongs, and information for identifying an EPS bearer to which the data packet belongs, a radio bearer to which the data packet belongs or an S 1 bearer to which the data packet belongs.

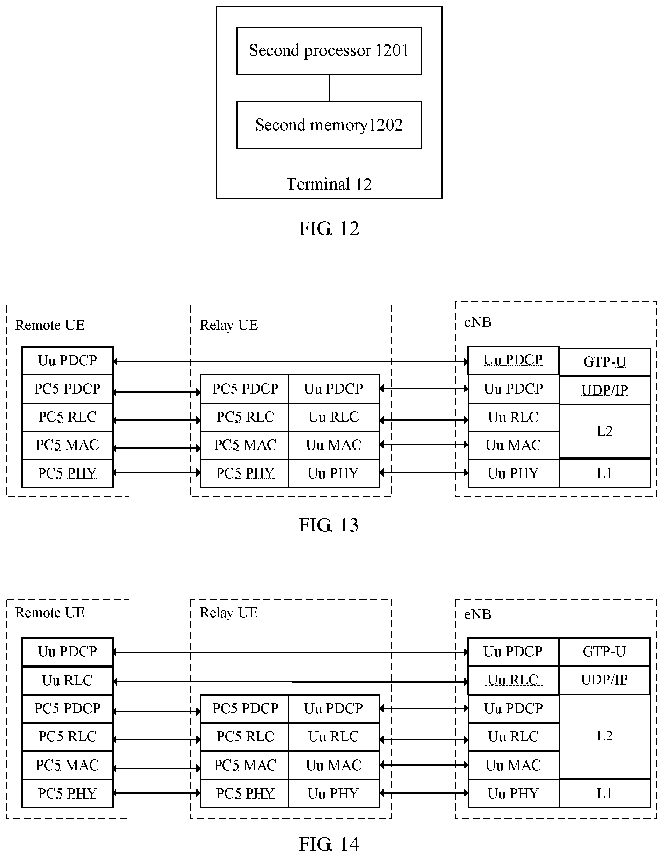

FIG. 12 is a structural diagram of another terminal according to an embodiment of the present application. As shown in FIG. 12, the terminal 12 provided by the embodiment includes a second memory 1201, a second processor 1202 and a routing program stored in the second memory 1201 and performed in the second processor 1202. The routing program, when executed by the second processor 1202, implements following steps: processing a to-be-sent data packet in a layer 2; and sending the processed data packet.

The routing program, when executed by the second processor, further implements following steps: receiving the data packet sent by the relay UE, and mapping the data packet to an EPS bearer corresponding to the remote UE or the radio bearer/the logical channel.

The step of processing a to-be-sent data packet in a layer 2 may include at least one of:
performing PDCP layer processing or data encapsulation via a Uu interface PDCP entity within the remote UE;
performing RLC layer processing or data encapsulation via a Uu interface RLC entity within the remote UE;
performing relay adaptation layer processing or data encapsulation via a relay adaptation layer entity within the remote UE;
performing PC5 PDCP layer processing or data encapsulation via a PC5 PDCP layer entity within the remote UE;
performing PC5 RLC layer processing or data encapsulation via a PC5 RLC layer entity within the remote UE; and
performing PC5 MAC layer processing or data encapsulation via a PC5 MAC layer entity within the remote UE.

The embodiments of the present application further provide a base station. The base station includes a third memory, a third processor and a routing program stored in the third memory and performed in the third processor. The routing program, when executed by the third processor, implements following steps: processing a to-be-sent data packet in a layer 2; and sending the processed data packet.

The routing program, when executed by the third processor, further implements one of following steps:
receiving a data packet which needs to be sent to a remote UE from a core network element, where the core network element is an SGW or an MME; and
producing the data packet which needs to be sent to the remote UE.

The step of sending the processed data packet may include:
sending the data packet performing a layer 2 relay forwarding via a relay UE to the relay UE according to at least one of configuration information of the relay UE connected with the remote UE in a context of the remote UE, and configuration information performing layer 2 relay forwarding via the relay UE.

For other details of devices described above, the method embodiments may be referred to. No further detail will be described herein again.

Through the implementation of the above embodiments, the method for the bearer mapping and the data forwarding in the layer 2 is provided, so that the relay UE correctly performs the layer 2 data routing and forwarding, and the operator may effectively manage and control the remote UE, thereby improving the application of D2D technology.

FIGS. 13 to 22 are schematic diagrams of ten exemplary protocol stacks of a method according to embodiments of the present application, showing the protocol stack structure among the remote UE, the relay UE and the base station. The remote UE may indirectly communicate with the base station via the layer 2 relay forwarding of the relay UE while directly communicating with the base station via the Uu interface. The remote UE and the relay UE are connected via the PC5 interface, and the relay UE and the base station are connected via the Uu interface. Optionally, the remote UE only indirectly communicates with the base station via the layer 2 relay forwarding of the relay UE.

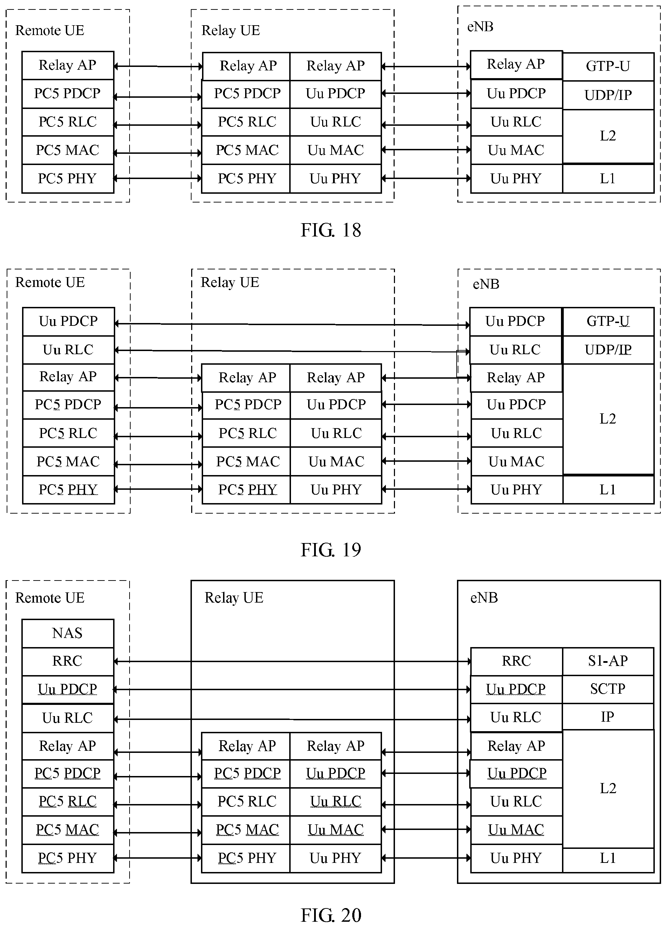

Using the protocol stack 7 shown in FIG. 19 as an example, for the uplink data forwarding, an access stratum (AS) layer (layer 2) protocol stack of the remote UE includes: the Uu PDCP, Uu RLC, the relay AP, the PC5 PDCP, PC5 RLC and PC5 MAC. If it is control plane signaling (including radio resource control (RRC) signaling and non-access stratum (NAS) signaling) that needs to be relay forwarded, an RRC layer and an NAS layer are above a Uu PDCP layer. After the data packet of the remote UE arrives in the Uu PDCP layer and is processed in the Uu PDCP layer, the Uu RLC layer and the relay AP layer, the data packet is mapped to the PC5 bearer between the remote UE and the relay UE, and sent to the relay UE via the PC5 interface.

After receiving the data of the remote UE and performing PC5 PHY layer parsing, PC5 MAC layer parsing, PC5 RLC layer parsing and PC5 PDCP layer parsing, in an exemplary embodiment, the relay UE may perform relay AP layer parsing, and map the data packet to a Uu air interface radio bearer of the relay UE. In an exemplary embodiment, the relay UE performs relay AP layer processing, performs Uu PDCP, Uu RLC, Uu MAC and Uu PHY processing on the data packet, and sends the data packet to the base station via the air interface radio bearer of the relay UE. After receiving the data of the remote UE and performing Uu PHY layer parsing, Uu MAC layer parsing, Uu RLC layer parsing, Uu PDCP layer parsing and the relay AP layer parsing, the base station maps the data packet to the air interface radio bearer or the EPS bearer of the corresponding remote UE, and delivers the data packet to the Uu PDCP entity or the Uu RLC entity corresponding to the bearer of the corresponding remote UE for subsequent operations.

For downlink data forwarding, the base station receives the data packet (user plane data or control plane signaling) of the remote UE from the core network element (the SGW or the MME), or the RRC layer of the base station produces the data packet which needs to be sent to the remote UE. After the data packet arrives in the Uu PDCP layer of at least one of the corresponding bearer and the logical channel within the base station corresponding to the remote UE, the Uu PDCP layer processing, the Uu RLC layer processing and the relay AP layer processing or data encapsulation is performed. The base station maps the data packet to the air interface radio bearer of the relay UE connected with the remote UE, and sends the data packet to the relay UE via the Uu interface.

After receiving the data, the relay UE performs Uu PHY layer parsing, Uu MAC layer parsing, Uu RLC layer parsing, Uu PDCP layer parsing and relay AP layer parsing. The relay UE determines the remote UE corresponding to the data packet, maps the data packet to at least one of the PC5 bearer and the logical channel, and sends the data packet to the remote UE via the PC5 interface.

After receiving the data, the remote UE performs PC5 PHY layer parsing, PC5 MAC layer parsing, PC5 RLC layer parsing, PC5 PDCP layer parsing and relay AP layer parsing. The remote UE maps the data packet to the air interface radio bearer or the EPS bearer of the corresponding remote UE, and delivered the data packet to the Uu RLC entity or the Uu PDCP entity of the corresponding bearer for subsequent processing. It is to be noted that the Uu RLC layer on the remote UE side is optional, and the Uu RLC layer corresponding to the remote UE on the base station side is also optional.

For the protocol stack 1 shown in FIG. 13, the difference between the protocol stack 1 and the protocol stack 7 is that, in the protocol stack 7, the Uu RLC layer and the relay AP layer exist between the Uu PDCP layer and the PC5 PDCP layer of the remote UE, and that the Uu RLC layer and the relay AP layer exist between the Uu PDCP layer of the remote UE and the Uu PDCP layer within the base station corresponding to the relay UE.

Using the uplink data as an example, the AS layer (layer 2) protocol stack of the remote UE includes: the Uu PDCP, the PC5 PDCP, PC5 RLC and PC5 MAC. If it is control plane signaling (including RRC signaling and NAS signaling) that needs to be relay forwarded, the RRC layer and the NAS layer are above the Uu PDCP layer. After the data packet of the remote UE arrives in the Uu PDCP layer and is processed in the Uu PDCP layer, the data packet is mapped to the PC5 bearer between the remote UE and the relay UE, and sent to the relay UE via the PC5 interface.

After receiving the data of the remote UE and performing PC5 PHY layer parsing, PC5 MAC layer parsing, PC5 RLC layer parsing and PC5 PDCP layer parsing, the relay UE maps the data packet to the Uu air interface radio bearer of the relay UE. After performing Uu PDCP processing, Uu RLC processing, Uu MAC processing and Uu PHY processing on the data packet, the relay UE sends the data packet to the base station via the air interface radio bearer of the relay UE. After receiving the data of the remote UE, the base station performs Uu PHY parsing, Uu MAC parsing, Uu RLC parsing and Uu PDCP parsing, maps the data packet to the air interface radio bearer or the EPS bearer of the remote UE, and delivers the data packet to the Uu PDCP entity corresponding to the bearer of the corresponding remote UE for subsequent operations.

In the protocol stack 2 shown in FIG. 14, the difference between the protocol stack 2 and the protocol stack 1 is that the Uu RLC layer exists below the Uu PDCP layers and above the PC5 PDCPs in the remote UE and the base station.

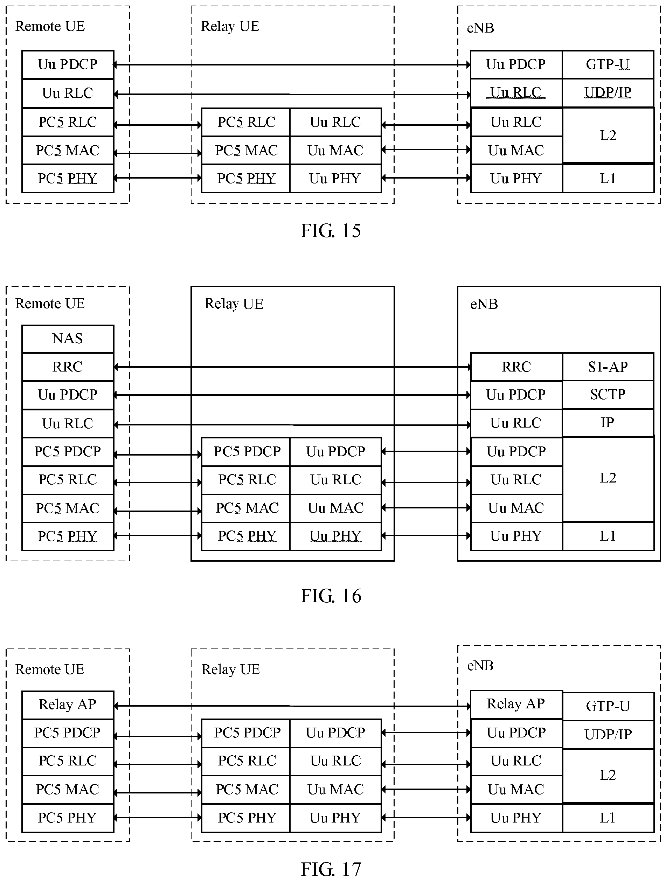

In the protocol stack 3 shown in FIG. 15, the difference between the protocol stack 3 and the protocol stack 2 is that the PC5 PDCP layer does not exist above the PC5 RLC layers of the remote UE and the relay UE, and the Uu PDCP layer does not exist on the Uu RLC layers of the relay UE and the base station.

In the protocol stack 4 shown in FIG. 16, the difference between the protocol stack 4 and the protocol stack 2 is that the protocol stack 4 is used for the relay forwarding of the control plane signaling, the RRC layer and the NAS layer exist above the Uu PDCP layer of the remote UE, and the RRC layer exists above the Uu PDCP layer of the base station corresponding to the remote UE.

In the protocol stack 5 shown in FIG. 17, the difference between the protocol stack 5 and the protocol stack 1 is that the relay AP layer is above the PC5 PDCP layer of the remote UE and above the Uu PDCP layer of the base station.

In the protocol stack 6 shown in FIG. 18, the difference between the protocol stack 6 and the protocol stack 5 is that the relay adaptation layer exists above the PC5 PDCP layer and the Uu PDCP layer of the relay UE.

In the protocol stack 8 shown in FIG. 20, the difference between the protocol stack 8 and the protocol stack 7 is that the protocol stack 8 is used for the relay forwarding of the control plane signaling, the RRC layer and the NAS layer exist above the Uu PDCP layer of the remote UE, and the RRC layer exists above the Uu PDCP layer of the base station corresponding to the remote UE.

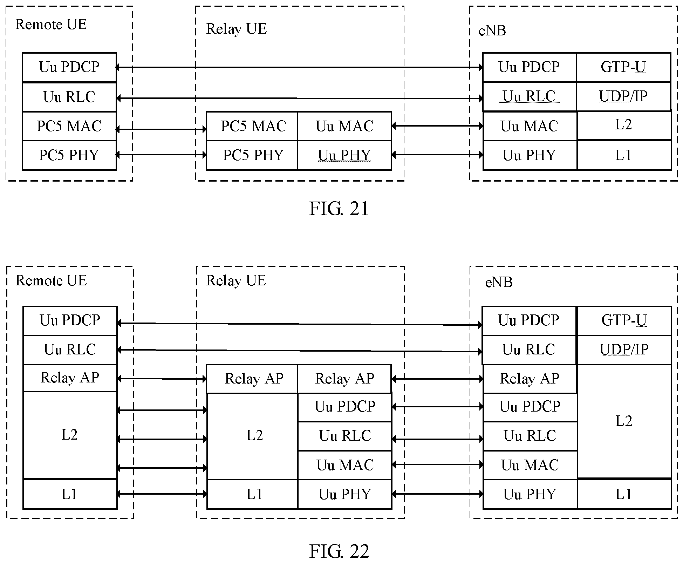

In the protocol stack 9 shown in FIG. 21, the difference between the protocol stack 9 and the protocol stack 3 is that no PC5 RLC layer is above the PC5 MAC layer of the remote UE, and no Uu RLC layer is above the Uu MAC layer of the base station corresponding to the relay UE. In addition, the Uu RLC layer on the remote UE side is optional, and the Uu RLC layer corresponding to the remote UE on the base station side is also optional.

It is to be noted that the method in the present application is applicable to the remote UE to access the relay UE via the 3rd Generation Partnership Project (3GPP) technology and communicate with the network side via the layer 2 relay of the relay UE. Different from the case of accessing via the 3GPP technology (PC5 interface), the PC5 interface protocol stacks of the remote UE and the relay UE are replaced by the protocol stacks under the Wifi or Bluetooth technology. That is, the PC5 interface protocol stacks in the protocol stacks shown in FIG. 13 to FIG. 21 are replaced by the corresponding layer 1 (L1)/layer 2 (L2) protocol stacks under the Wifi or Bluetooth technology. That is, the layer 2 relay may be implemented by using the protocol stack shown in FIG. 20 in a case in which the remote UE accesses the relay UE via Wifi or Bluetooth, for example, in a case in which the remote UE accesses the relay UE via non-3GPP technology (Wifi or Bluetooth).

A detailed description of embodiments of the present application will be given below with reference to application scenarios.

The method flow 1 for the relay UE to perform layer 2 routing and forwarding described below may can be used in the protocol stacks shown in FIG. 13, FIG. 14, FIG. 15, FIG. 16 and FIG. 21. Using FIG. 13 as an example, in the method of the embodiment, the steps for the relay UE to perform layer 2 uplink routing and forwarding are described below.

In step 201, a higher layer of the remote UE produces the data packet, and performs Uu PDCP layer processing after the data packet arrives in the Uu PDCP layer. In an exemplary embodiment, the Uu PDCP layer processing is performed in at least one of following modes.
1) The remote UE contains information for identifying at least one of the bearer to which the remote UE belongs and the bearer to which the data packet belongs in the Uu PDCP header added for the data packet, where the information for identifying at least one of the bearer to which the remote UE belongs and the bearer to which the data packet belongs includes:
   a. at least one of identification information of the remote UE and bearer identification information, where the identification information of the remote UE includes one of or a combination of: a C-RNTI, a D2D layer 2 identifier of the remote UE, an eNB UE X2 AP ID, an eNB UE S 1 AP ID, an index value of an identifier of the remote UE, and a new-defined UE identifier, and the bearer identification information includes one of or a combination of: an EPS bearer identifier, a radio bearer identifier, an E-RAB identifier, an S 1 bearer identifier, an LCID, a new-defined bearer identifier, and control plane signaling type indication information or user plane data type indication information; or
   b. information for identifying a combination of the remote UE and the bearer, such as the TEID, where the bearer is the radio bearer, the S1 bearer or the EPS bearer of the remote UE.
      In an exemplary embodiment, the information for identifying at least one of the bearer to which the remote UE belongs and the bearer to which to-be-sent uplink data belongs is allocated by the base station or the core network element.
2) The remote UE contains type indication information for indicating that the data packet is a layer 2 relay or type indication information for indicating that the data packet is a data packet forwarded via the relay UE into the Uu PDCP header added for the data packet.

In step 202, the remote UE maps the data packet to the PC5 bearer between the remote UE and the relay UE. The data packet is mapped in one of following modes.
1) The remote UE maps the data packet to the PC5 bearer or the PC5 logical channel corresponding to the PPPP according to the QCI of the EPS bearer to which the data packet belongs and the mapping relationship between the QCI and the PPPP.
2) The remote UE maps the data packet to the PC5 bearer or the PC5 logical channel corresponding to the QCI according to the QCI of the EPS bearer to which the data packet belongs and the mapping relationship between the Uu QCI and the PC5 QCI.
3) The remote UE maps the data packet to the PC5 bearer or the PC5 logical channel corresponding to the QCI according to the QCI of the EPS bearer to which the data packet belongs.
4) The remote UE maps the data packet to the PC5 bearer or the PC5 logical channel dedicated for forwarding data.
5) The remote UE maps the data packet to the PC5 bearer or the PC5 logical channel corresponding to the EPS bearer to which the data packet belongs.

In step 203, in an exemplary embodiment, the remote UE needs to forward the bearer of the data packet corresponding to the PC5 PDCP entity, and performs corresponding PC5 PDCP layer processing on the data packet. In an exemplary embodiment, the PC5 PDCP layer of the remote UE no longer performs encryption processing on the data packet. For example, values of a KD-sess identity and a serial number (SN) may directly set to be 0.

In an exemplary embodiment, the remote UE contains type indication information for indicating that the data packet is the data packet forwarded via the relay UE into the PC5 PDCP header added for the data packet.

In step 204, the PC5 RLC entity of the remote UE performs PC5 RLC layer processing on the data packet. The PC5 RLC layer supports at least one of modes: an RLC acknowledged mode (AM), an unacknowledged mode (UM), and a transparent mode (TM). If the PC5 RLC layer supports the RLC AM mode, in an exemplary embodiment, the base station may configure AM mode related parameters for the remote UE, such as t-PollRetransmit, pollPDU, pollByte, maxRetxThreshold, t-Reordering, t-StatusProhibit and the like. Besides the above RLC configuration information, a status protocol data unit (STATUS PDU) also needs to be introduced into the RLC layer.

In an exemplary embodiment, the remote UE contains type indication information for indicating that the data packet is the data packet forwarded via the relay UE into the PC5 RLC header added for the data packet.

In step 205, the remote UE performs at least one of MAC processing and RHY processing on the data packet, acquires a PC5 resource, and sends the data packet to the relay UE. In the embodiment, the remote UE may send the data packet to the relay UE via the specific PC5 bearer for forwarding the data.

In step 206, the relay UE parses a received PC5 data packet of the remote UE, and may identify that the data packet is a data packet which needs perform layer 2 forwarding in one of two following modes.
1) The data packet is received via the specific PC5 bearer for forwarding data.
1) Type indication information contained in the PC5 PDCP header of the data packet or the RLC header of the data packet indicates that the data packet is a data packet forwarded via the relay UE.

In step 207, the relay UE maps the data packet to an air interface bearer of the relay UE. The data packet is mapped to the air interface bearer in one of three following modes.
1) The relay UE maps the to-be-forwarded data packet of the remote UE to the PDN connection or the bearer of the relay UE for forwarding the data.
2) The relay UE maps the data packet to the bearer of the relay UE corresponding to the QCI according to the correspondence between the PPPP and the QCI as well as the PPPP value of the PC5 bearer corresponding to the data packet or the PPPP value of the PC5 logical channel corresponding to the data packet.
3) The relay UE maps the data packet to the bearer of the relay UE corresponding to the QCI according to the QCI value of the PC5 bearer corresponding to the data packet or the QCI value of the PC5 logical channel corresponding to the data packet.

In step 208, in an exemplary embodiment, the relay UE performs Uu PDCP layer processing on the data packet. In an exemplary embodiment, the relay UE contains type indication information for indicating that the data packet is the data packet forwarded via the relay UE into the Uu PDCP header added for the data packet. In an exemplary embodiment, the Uu PDCP layer of the relay UE does not perform encryption processing on the data packet.

In step 209, the relay UE performs at least one of Uu RLC layer processing, MAC layer processing and PHY layer processing on the data packet, and sends the data packet to the base station via the bearer of the relay UE. In an exemplary embodiment, the relay UE contains type indication information for indicating that the data packet is the data packet forwarded via the relay UE into the Uu RLC header added for the data packet.

In step 210, the base station, after receiving the data packet, performs at least one of MAC parsing and RLC parsing. In an exemplary embodiment, the base station performs PDCP parsing on the data packet. The base station may identify that the data packet is the data packet routed and forwarded by the remote UE via the relay UE in one of two following modes.
1) The data packet is received via the specific bearer for forwarding data.
2) Type indication information contained in the PDCP header of the data packet or the RLC header of the data packet indicates that the data packet is the data packet forwarded via the relay UE.

In step 211, the base station maps the data packet to the EPS bearer or the air interface bearer corresponding to the remote UE. The base station, by parsing the data packet, acquires information for identifying at least one of the bearer to which the remote UE belongs and the bearer to which the data packet belongs in the Uu PDCP header of the remote UE, and finds at least one of the bearer of the remote UE corresponding to the received data packet and the bearer of the remote UE according to the information. The base station maps the data packet to the bearer of the corresponding remote UE, and sends the data packet to the core network element (the SGW or the MME) via the bearer of the remote UE.

If the data packet is an RRC message containing no NAS information, the base station terminates the data packet, and does not send the data packet or the core network element.

By using a scenario in the embodiment, the steps for the relay UE to perform layer 2 downlink routing and forwarding are described below.

In step 301, downlink data of the remote UE arrives in the base station, or the base station produces the data packet (including control plane signaling) which needs to be sent to the remote UE. The bae station determines whether the data packet needs to be forwarded via the relay UE. If the data packet needs to be forwarded via the relay UE, the relay UE for forwarding the data packet needs to be determined. The base station may negotiate with the remote UE at least one of: whether the relay UE is needed for forwarding, and which data of the bearer or the logical channel is forwarded via the relay UE. The information may be determined and allocated by the base station to the remote UE, or may be determined and notified to the base station. If it is determined that the relay UE is needed for forwarding, the following steps are performed.

In step 302, the base station performs encapsulation corresponding to the air interface (Uu interface) on the data packet. The Uu interface PDCP entity corresponding to the base station performs corresponding Uu PDCP layer processing. In an exemplary embodiment, the base station contains at least one of information for identifying the bearer to which the data packet belongs and type indication information for indicating that the data packet is the data packet forwarded via the relay UE into the Uu PDCP header added for the data packet. In an exemplary embodiment, the Uu interface RLC entity corresponding to the base station performs corresponding Uu RLC layer processing.

In step 303, the base station maps the data packet to at least one of the corresponding air interface bearer or the logical channel of the relay UE connected with the remote UE. The data packet is mapped to the air interface bearer in at least one of following modes.
1) The base station determines the relayed UE connected with the remote UE, and maps the data packet to the bearer corresponding to the QCI of the relay UE connected with the remote UE according to the QCI of the bearer to which the data packet belongs.
2) The base station determines the relayed UE connected with the remote UE, and maps the data packet to the specific PDN connection or the bearer, for forwarding the data, of the relay UE connected with the remote UE.

In step 304, at least one of the PDCP entity, the RLC entity and the MAC entity of the bearer or the logical channel within the base station corresponding to the relay UE performs correspondingly at least one of: corresponding PDCP layer processing, RLC layer processing and MAC layer processing. In an exemplary embodiment, the step 304 includes at least one of modes.
1) The base station contains information for identifying at least one of the bearer to which the remote UE belongs and the bearer to which the data packet belongs into at least one of the PDCP header added for the data packet and the RLC header added for the data packet.
2) The base station contains type indication information for indicating that the data packet is the data packet forwarded via the relay UE into at least one of the PDCP header added for the data packet and the RLC header added for the data packet.

In step 305, the relay UE performs corresponding layer 2 processing on the received data packet. The relay UE parses the received data packet, acquires information for identifying at least one of the bearer to which the remote UE belongs and the bearer to which the data packet belongs contained in the PDCP header of the data packet or the RLC header of the data packet, and finds at least one of the corresponding remote UE and the corresponding bearer according to the information.

In step 306, the relay UE maps the data packet to the corresponding PC5 bearer. The data packet is mapped in one of following modes.
1) The relay UE maps the data packet to the PC5 bearer corresponding to the PPPP according to the QCI of the bearer to which the data packet belongs and the mapping relationship between the QCI and the PPPP.
2) The relay UE maps the data packet to the PC5 bearer corresponding to the QCI according to the QCI of the bearer to which the data packet belongs.
3) The relay UE maps the data packet to the PC5 bearer dedicated for forwarding the data according to the QCI of the bearer to which the data packet belongs.
4) The relay UE maps the data packet to the PC5 bearer dedicated for forwarding the data.
5) The relay UE maps the data packet to the PC5 bearer corresponding to the bearer to which the data packet belongs according to information of the bearer to which the data packet belongs.

In step 307, the relay UE performs corresponding layer 2 processing on the data packet, and sends the data packet to the corresponding remote UE via the corresponding PC5 bearer. In an exemplary embodiment, the step 307 includes at least one of modes.
1) The relay UE contains information for identifying the bearer to which the data packet belongs in at least one of the PDCP header added for the data packet and the RLC header added for the data packet.
2) The relay UE contains type indication information for indicating that the data packet is the data packet forwarded via the relay UE in at least one of the PDCP header added for the data packet and the RLC header added for the data packet.

In step 308, the base station performs corresponding parsing and layer 2 processing on the data packet received from the relay UE. The layer 2 processing may include at least one of MAC layer processing, RLC layer processing and PDCP layer processing.

In step 309, the remote UE maps the data packet to at least one of the air interface radio bearer and the logical channel or the EPS bearer of the corresponding remote UE, and delivers the data packet to an upper layer for processing. The data packet is mapped in one of following modes.
1) The remote UE maps the received data packet to at least one of the air interface radio bearer and the logical channel or the EPS bearer corresponding to the identification information according to information for identifying the bearer to which the data packet belongs contained in one of the Uu PDCP header of the received data packet, the PC5 PDCP header of the received data packet and PC5 RLC header of the received data packet.
2) The remote UE maps the data packet to at least one of the air interface radio bearer and the logical channel or the EPS bearer corresponding to the QCI value and according to the QCI value of the PC5 bearer to which the data packet belongs.
3) The remote UE maps the data packet to at least one of the air interface radio bearer and the logical channel or the EPS bearer corresponding to the QCI value according to the PPPP value of the PC5 bearer to which the data packet belongs and the mapping relationship between the PPPP value and the QCI value.
4) The remote UE maps the data packet to at least one of the air interface radio bearer and the logical channel or the EPS bear corresponding to at least one of the PC5 bearer and the logical channel according to the mapping relationship between at least one the EPS bearer and the air interface bearer and at least of the corresponding PC5 bearer and the logical channel.

The method flow 2 for the relay UE to perform layer 2 routing and forwarding described below may can be used in the protocol stacks shown in FIG. 13, FIG. 14, FIG. 15, FIG. 16 and FIG. 21. Using FIG. 13 as an example, in the method of the embodiment, the steps for the relay UE to perform layer 2 uplink routing and forwarding are described below.

In step 401, the higher layer of the remote UE produces the data packet, and performs corresponding Uu PDCP layer processing after the data packet arrives in the Uu PDCP layer.

In step 402, the remote UE maps the data packet to the PC5 bearer between the remote UE and the relay UE. The data packet is mapped in one of following modes.
1) The remote UE maps the data packet to the PC5 bearer or the PC5 logical channel corresponding to the PPPP according to the QCI of the EPS bearer to which the data packet belongs and the mapping relationship between the QCI and the PPPP.
2) The remote UE maps the data packet to the PC5 bearer or the PC5 logical channel corresponding to the QCI according to the QCI of the EPS bearer to which the data packet belongs and the mapping relationship between the Uu QCI and the PC5 QCI.
3) The remote UE maps the data packet to the PC5 bearer or the PC5 logical channel corresponding to the QCI according to the QCI of the EPS bearer to which the data packet belongs.
4) The remote UE maps the data packet to the PC5 bearer or the PC5 logical channel dedicated for forwarding data.
5) The remote UE maps the data packet to at least one of: the EPS bearer to which the data packet belongs, and the PC5 bearer or the PC5 logical channel corresponding to the Uu radio bearer. In an exemplary embodiment, at least one of the EPS bearer and the Uu radio bearer has a one-to-one correspondence with the corresponding PC5 bearer or the PC5 logical channel.

In step 403, in an exemplary embodiment, the remote UE needs to forward the bearer of the data packet corresponding to the PC5 PDCP entity, and performs corresponding PC5 PDCP layer processing on the data packet. In an exemplary embodiment, the PC5 PDCP layer of the remote UE no longer performs encryption processing on the data packet. For example, values of a KD-sess identity and the SN may directly set to be 0. The PC5 PDCP layer processing may include at least one of following modes.
1) The remote UE contains information for identifying at least one of the bearer to which the remote UE belongs and the bearer to which the data packet belongs in the PC5 PDCP header added for the data packet, where the information for identifying at least one of the bearer to which the remote UE belongs and the bearer to which the data packet belongs includes:
   at least one of identification information of the remote UE and bearer identification information, where the identification information of the remote UE includes one of or a combination of: a C-RNTI, a D2D layer 2 identifier of the remote UE, an eNB UE X2 AP ID, an eNB UE S 1 AP ID, an index value of an identifier of the remote UE, and a new-defined UE identifier, and the bearer identification information includes one of or a combination of: an EPS bearer identifier, a radio bearer identifier, an E-RAB identifier, an S 1 bearer identifier, an LCID, a new-defined bearer identifier, and control plane signaling type indication information or user plane data type indication information; or
   b. information for identifying a combination of the remote UE and the bearer, such as the TEID. The bearer is the radio bearer, the S 1 bearer or the EPS bearer of the remote UE.
   In an exemplary embodiment, the information for identifying at least one of the bearer to which the remote UE belongs and the bearer to which to-be-sent uplink data belongs is allocated by the base station or the core network element.
2) The remote UE contains type indication information for indicating that the data packet is a layer 2 relay or type indication information for indicating that the data packet is a data packet forwarded via the relay UE in the PC5 PDCP header added for the data packet.

In step 404, the PC5 RLC entity of the remote UE performs corresponding PC5 RLC layer processing on the data packet. The PC5 RLC layer supports at least one of modes: the RLC AM mode, the UM mode, and the TM mode. If the PC5 RLC layer supports the RLC AM mode, in an exemplary embodiment, the base station may configure AM mode related parameters for the remote UE, such as t-PollRetransmit, pollPDU, pollByte, maxRetxThreshold, t-Reordering, t-StatusProhibit and the like. Besides the above RLC configuration information, the STATUS PDU also needs to be introduced into the RLC layer.

In an exemplary embodiment, the remote UE contains type indication information for indicating that the data packet is the data packet forwarded via the relay UE in the PC5 RLC header added for the data packet.

In step 405, the remote UE performs at least one of MAC processing and RHY processing on the data packet, acquires a PC5 resource, and sends the data packet to the relay UE. In the embodiment, the remote UE may send the data packet to the relay UE via the specific PC5 bearer for forwarding the data.

In step 406, the relay UE parses a received PC5 data packet of the remote UE, and may identify that the data packet is a data packet which needs perform layer 2 forwarding in one of two following modes.
1) The data packet is received via the specific PC5 bearer for forwarding data.
2) Type indication information contained in the PC5 PDCP header of the data packet or the RLC header of the data packet indicates that the data packet is a data packet forwarded via the relay UE.

In step 407, the relay UE maps the data packet to an air interface bearer of the relay UE. The data packet is mapped to the air interface bearer in one of three following modes.
1) The relay UE maps the to-be-forwarded data packet of the remote UE to the PDN connection or the bearer of the relay UE dedicated for forwarding the data.
2) The relay UE maps the data packet to the bearer of the relay UE corresponding to the QCI according to the correspondence between the PPPP and the QCI as well as the PPPP value of the PC5 bearer corresponding to the data packet or the PPPP value of the PC5 logical channel corresponding to the data packet.
3) The relay UE maps the data packet to the bearer of the relay UE corresponding to the QCI according to the QCI value of the PC5 bearer corresponding to the data packet or the QCI value of the PC5 logical channel corresponding to the data packet.

In step 408, in an exemplary embodiment, the relay UE performs Uu PDCP layer processing on the data packet. In an exemplary embodiment, the Uu PDCP layer of the relay UE does not perform encryption processing on the data packet. The Uu PDCP layer processing may include at least one of following modes (it is to be noted that in other method embodiments, the Uu PDCP layer processing described below may be performed in the Uu RLC layer, or may be performed in the Uu MAC layer).
1) The relay UE contains information for identifying at least one of the bearer to which the remote UE belongs and the bearer to which the data packet belongs in the Uu PDCP header added for the data packet, where the information for identifying at least one of the bearer to which the remote UE belongs and the bearer to which the data packet belongs includes:
   at least one of identification information of the remote UE and bearer identification information, where the identification information of the remote UE includes one of or a combination of: a C-RNTI, a D2D layer 2 identifier of the remote UE, an eNB UE X2 AP ID, an eNB UE S 1 AP ID, an index value of an identifier of the remote UE, and a new-defined UE identifier, and the bearer identification information includes one of or a combination of: an EPS bearer identifier, a radio bearer identifier, an E-RAB identifier, an S 1 bearer identifier, an LCID, a new-defined bearer identifier, and control plane signaling type indication information or user plane data type indication information; or
   b. information for identifying a combination of the remote UE and the bearer, such as the TEID. The bearer is the radio bearer, the S1 bearer or the EPS bearer of the remote UE.
   In an exemplary embodiment, the information for identifying at least one of the bearer to which the remote UE belongs and the bearer to which to-be-sent uplink data belongs is allocated by the base station or the core network element.
2) The relay UE contains type indication information for indicating that the data packet is a layer 2 relay or type indication information for indicating that the data packet is a data packet forwarded via the relay UE in the Uu PDCP header added for the data packet.

In step 409, the relay UE performs at least one of Uu RLC layer processing, MAC layer processing and PHY layer processing on the data packet, and sends the data packet to the base station via the bearer of the relay UE. In an exemplary embodiment, the relay UE contains type indication information for indicating that the data packet is the data packet forwarded via the relay UE in the Uu RLC header added for the data packet.

In step 410, the base station, after receiving the data packet, performs at least one of MAC parsing and RLC parsing. In an exemplary embodiment, the base station performs PDCP parsing on the data packet. The base station may identify that the data packet is the data packet routed and forwarded by the remote UE via the relay UE in one of two following modes.
1) The data packet is received via the specific bearer for forwarding data.
2) Type indication information contained in the PDCP header of the data packet or the RLC header of the data packet indicates that the data packet is the data packet forwarded via the relay UE.

In step 411, the base station maps the data packet to the EPS bearer of the corresponding remote UE. The Uu PDCP entity related to the relay UE within the base station, by parsing the data packet, acquires information for identifying at least one of the bearer to which the remote UE belongs and the bearer to which the data packet belongs in the Uu PDCP header of the relay UE, and finds at least one of the bearer of the remote UE corresponding to the received data packet and the bearer of the remote UE according to the information. The base station maps the data packet to the bearer of the corresponding remote UE, and sends the data packet to the core network element (the SGW or the MME) via the bearer of the remote UE.

If the data packet is an RRC message containing no NAS information, the base station terminates the data packet, and does not send the data packet or the core network element.

By using a scenario in the embodiment, the steps for the relay UE to perform layer 2 downlink routing and forwarding are described below.

In step 501, downlink data of the remote UE arrives in the base station, or the base station produces the data packet (including control plane signaling) which needs to be sent to the remote UE. The bae station determines whether the data packet needs to be forwarded via the relay UE. If the data packet needs to be forwarded via the relay UE, the relay UE for forwarding the data packet needs to be determined. The base station may negotiate with the remote UE at least one of: whether the relay UE is needed for forwarding, and which data of the bearer the logical channel is forwarded via the relay UE. The information may be determined and allocated by the base station to the remote UE, or may be determined and notified to the base station. If it is determined that the relay UE is needed for forwarding, the following steps are performed.

In step 502, the base station performs encapsulation corresponding to the air interface (Uu interface) on the data packet. The Uu interface PDCP entity corresponding to the base station performs corresponding Uu PDCP layer processing. In an exemplary embodiment, the Uu interface RLC entity corresponding to the base station performs corresponding Uu RLC layer processing.

In step 503, the base station maps the data packet to at least one of the corresponding air interface bearer or the logical channel of the relay UE connected with the remote UE. The data packet is mapped to the air interface bearer in at least one of following modes.
1) The base station determines the relayed UE connected with the remote UE, and maps the data packet to the bearer corresponding to the QCI of the relay UE connected with the remote UE according to the QCI of the bearer to which the data packet belongs.
2) The base station determines the relayed UE connected with the remote UE, and maps the data packet to the specific PDN connection or the bearer, for forwarding the data, of the relay UE connected with the remote UE.

In step 504, at least one of the PDCP entity, the RLC entity and the MAC entity of the bearer or the logical channel within the base station corresponding to the relay UE performs correspondingly at least one of: corresponding PDCP layer processing, RLC layer processing and MAC layer processing. In an exemplary embodiment, the step 304 includes at least one of modes.
1) The base station contains information for identifying at least one of the bearer to which the remote UE belongs and the bearer to which the data packet belongs in at least one of the packet header and the subheader (referred to as the packet header/subheader) for the PDCP layer, the RLC header/subheader and the MAC layer header/subheader added for the data packet.
2) The base station contains type indication information for indicating that the data packet is the data packet forwarded via the relay UE in at least one of the PDCP layer header/subheader, the RLC header/subheader and the MAC layer header/subheader added for the data packet.

In step 505, the relay UE performs corresponding layer 2 processing on the received data packet. The relay UE parses the received data packet, acquires information for identifying at least one of the bearer to which the remote UE belongs and the bearer to which the data packet belongs contained in the PDCP header of the data packet or the RLC header of the data packet, and finds at least one of the corresponding remote UE and the corresponding bearer according to the information.

In step 506, the relay UE maps the data packet to the corresponding PC5 bearer. The data packet is mapped in one of following modes.
1) The relay UE maps the data packet to the PC5 bearer corresponding to the PPPP according to the QCI of the bearer to which the data packet belongs and the mapping relationship between the QCI and the PPPP.
2) The relay UE maps the data packet to the PC5 bearer corresponding to the QCI according to the QCI of the bearer to which the data packet belongs.
3) The relay UE maps the data packet to the PC5 bearer dedicated for forwarding the data according to the QCI of the bearer to which the data packet belongs.
4) The relay UE maps the data packet to the PC5 bearer dedicated for forwarding the data.
5) The relay UE maps the data packet to the PC5 bearer corresponding to the bearer to which the data packet belongs according to information of the bearer to which the data packet belongs.

In step 507, the relay UE performs corresponding layer 2 processing on the data packet, and sends the data packet to the corresponding remote UE via the corresponding PC5 bearer. In an exemplary embodiment, the step 307 includes at least one of modes.
1) The relay UE contains information for identifying the bearer to which the data packet belongs into at least one of the PDCP header added for the data packet and the RLC header added for the data packet.
2) The relay UE contains type indication information for indicating that the data packet is the data packet forwarded via the relay UE into at least one of the PDCP header added for the data packet and the RLC header added for the data packet.

In step 508, the base station performs corresponding parsing and layer 2 processing on the data packet received from the relay UE. The layer 2 processing may include at least one of MAC layer processing, RLC layer processing and PDCP layer processing.

In step 509, the remote UE maps the data packet to at least one of the air interface radio bearer/the logical channel or the EPS bearer of the corresponding remote UE, and delivers the data packet to an upper layer for processing. The data packet is mapped in one of following modes.
1) The remote UE maps the received data packet to at least one of the air interface radio bearer/the logical channel or the EPS bearer corresponding to the identification information according to information for identifying the bearer to which the data packet belongs contained in one of the PC5 PDCP header and PC5 RLC header of the received data packet.
2) The remote UE maps the data packet to at least one of the air interface radio bearer/the logical channel or the EPS bearer corresponding to the QCI value according to the QCI value of the PC5 bearer to which the data packet belongs.
3) The remote UE maps the data packet to at least one of the air interface radio bearer/the logical channel or the EPS bearer corresponding to the QCI value according to the PPPP value of the PC5 bearer to which the data packet belongs and the mapping relationship between the PPPP value and the QCI value.
4) The remote UE maps the data packet to at least one of the air interface radio bearer/the logical channel or the EPS bear corresponding to the QCI value according to the mapping relationship between at least one the EPS bearer and the air interface bearer and at least of the PC5 bearer.

The method flow 3 for the relay UE to perform layer 2 routing and forwarding described below may can be used in the protocol stacks shown in FIG. 17, FIG. 18 and FIG. 19. The difference between the method flow 3 in the scenario of the embodiment and the methods 1 and 2 is that the relay AP is introduced in the method flow 3 for implementing the related function of layer 2 forwarding and routing. Using FIG. 18 as an example, in the method of the embodiment, the steps for the relay UE to perform layer 2 uplink routing and forwarding are described below.

In step 601, the higher layer of the remote UE produces the data packet, and in an exemplary embodiment, performs Uu PDCP layer processing after the data packet arrives in the Uu PDCP layer.

In step 602, the data packet arrives in the relay AP, and performs corresponding adaptation layer processing. The step 602 may include at least one of following operations.
1) The remote UE contains information for identifying at least one of the bearer to which the remote UE belongs and the bearer to which the data packet belongs in the adaptation layer header added for the data packet, where the information for identifying at least one of the bearer to which the remote UE belongs and the bearer to which the data packet belongs includes:
   at least one of identification information of the remote UE and bearer identification information, where the identification information of the remote UE includes one of or a combination of: a C-RNTI, a D2D layer 2 identifier of the remote UE, an eNB UE X2 AP ID, an eNB UE S 1 AP ID, an index value of an identifier of the remote UE, and a new-defined UE identifier, and the bearer identification information includes one of or a combination of: an EPS bearer identifier, a radio bearer identifier, an E-RAB identifier, an S 1 bearer identifier, an LCID, a new-defined bearer identifier, and control plane signaling type indication information or user plane data type indication information; or
   b. information for identifying a combination of the remote UE and the bearer, such as the TEID. The bearer is the radio bearer, the S 1 bearer or the EPS bearer of the remote UE. _{∘}
   In an exemplary embodiment, the information for identifying at least one of the bearer to which the remote UE belongs and the bearer to which to-be-sent uplink data belongs is allocated by the base station or the core network element.
2) The remote UE contains type indication information for indicating that the data packet is a layer 2 relay or type indication information for indicating that the data packet is a data packet forwarded via the relay UE in adaptation layer header added for the data packet.

In step 603, the remote UE maps the data packet to the PC5 bearer between the remote UE and the relay UE. The data packet is mapped in one of following modes.
1) The remote UE maps the data packet to the PC5 bearer or the PC5 logical channel corresponding to the PPPP according to the QCI of the EPS bearer to which the data packet belongs and the mapping relationship between the QCI and the PPPP.
2) The remote UE maps the data packet to the PC5 bearer or the PC5 logical channel corresponding to the QCI according to the QCI of the EPS bearer to which the data packet belongs and the mapping relationship between the Uu QCI and the PC5 QCI.
3) The remote UE maps the data packet to the PC5 bearer or the PC5 logical channel corresponding to the QCI according to the QCI of the EPS bearer to which the data packet belongs.
4) The remote UE maps the data packet to the PC5 bearer or the PC5 logical channel dedicated for forwarding data.
5) The remote UE maps the data packet to the PC5 bearer or the PC5 logical channel corresponding to the EPS bearer to which the data packet belongs.

In step 604, in an exemplary embodiment, the remote UE needs to forward the bearer of the data packet corresponding to the PC5 PDCP entity, and performs corresponding PC5 PDCP layer processing on the data packet.In an exemplary embodiment, the PC5 PDCP layer of the remote UE no longer performs encryption processing on the data packet. For example, values of a KD-sess identity and the SN may directly set to be 0.

In an exemplary embodiment, if the PC5 PDCP entity of the remote UE performs corresponding PC5 PDCP layer processing on the data packet, the remote UE contains type indication information for indicating that the data packet is the data packet forwarded via the relay UE in the PC5 PDCP header added for the data packet.

In step 605, the PC5 RLC entity of the remote UE performs corresponding PC5 RLC layer processing on the data packet.The PC5 RLC layer supports at least one of modes: the RLC AM mode, the UM mode, and the TM mode. If the PC5 RLC layer supports the RLC AM mode, in an exemplary embodiment, the base station may configure AM mode related parameters for the remote UE, such as t-PollRetransmit, pollPDU, pollByte, maxRetxThreshold, t-Reordering, t-StatusProhibit and the like. Besides the above RLC configuration information, the STATUS PDU also needs to be introduced into the RLC layer.

In an exemplary embodiment, the remote UE contains type indication information for indicating that the data packet is the data packet forwarded via the relay UE in the PC5 RLC header added for the data packet.

In step 606, the remote UE performs at least one of MAC processing and RHY processing on the data packet, acquires a PC5 resource, and sends the data packet to the relay UE. In the embodiment, the remote UE may send the data packet to the relay UE via the specific PC5 bearer for forwarding the data.

In step 607, the relay UE parses a received PC5 data packet of the remote UE, and may identify that the data packet is a data packet which needs perform layer 2 forwarding in one of two following modes.
1) The data packet is received via the specific PC5 bearer for forwarding data.
1) Type indication information contained in the PC5 PDCP header layer, RLC layer or the adaptation layer of the data packet indicates that the data packet is the data packet forwarded via the relay UE.

In an exemplary embodiment, the relay UE, by parsing the relay AP, acquires information for identifying at least one of the bearer to which the remote UE belongs and the bearer to which the data packet belongs contained in the relay adaptation layer header.

In step 608, the relay UE maps the data packet to an air interface bearer of the relay UE. The data packet is mapped to the air interface bearer in one of three following modes.
1) The relay UE maps the to-be-forwarded data packet of the remote UE to the PDN connection or the bearer of the relay UE dedicated for forwarding the data.
2) The relay UE maps the data packet to the bearer of the relay UE corresponding to the QCI according to the correspondence between the PPPP and the QCI and the PPPP value of the bearer to the data packet.
3) The relay UE maps the data packet to the bearer of the relay UE of corresponding QCI according to the QCI value of the bearer to which the data packet belongs.

In step 609, in an exemplary embodiment, the relay UE contains following information in the relay adaptation layer header added for the data packet.
1) information for identifying at least one of the bearer to which the remote UE belongs and the bearer to which the data packet belongs, where the content contained in the information for identifying at least one of the bearer to which the remote UE belongs and the bearer to which the data packet belongs is shown in then step 203.
2) type indication information for indicating that the data packet is the layer 2 relay or type indication information for indicating that the data packet is the data packet forwarded via the relay UE.

In an exemplary embodiment, the Uu PDCP layer of the relay UE does not perform encryption processing on the data packet.

In step 610, the relay UE performs at least one of Uu PDCP layer processing, RLC layer processing, MAC layer processing and PHY layer processing on the data packet, and sends the data packet to the base station via the bearer of the relay UE. In an exemplary embodiment, the relay UE contains type indication information for indicating that the data packet is the layer 2 relay or type indication information for indicating that the data packet is the data packet forwarded via the relay UE in the Uu PDCP header or RLC added for the data packet.

In step 611, the base station, after receiving the data packet, performs at least one of corresponding Uu MAC, RLC, PDCP and relay AP parsing. The base station may identify that the data packet is the data packet routed and forwarded by the remote UE via the relay UE in one of two following modes.
1) The data packet is received via the specific bearer for forwarding data.
2) Type indication information contained in the MAC header layer, RLC layer, PDCP layer or the adaptation layer of the data packet indicates that the data packet is the data packet forwarded via the relay UE.

In step 612, the base station maps the data packet to the EPS bearer or the air interface bearer corresponding to the remote UE. The base station, by parsing the data packet, acquires information for identifying at least one of the bearer to which the remote UE belongs and the bearer to which the data packet belongs in the relay adaptation layer header of the remote UE, and finds at least one of the bearer of the remote UE corresponding to the received data packet and the bearer of the remote UE according to the information. The base station maps the data packet to the bearer of the corresponding remote UE, and sends the data packet to the core network element (the SGW or the MME) via the bearer of the remote UE.

If the data packet is an RRC message containing no NAS information, the base station terminates the data packet, and does not send the data packet or the core network element.

By using a scenario in the embodiment, the steps for the relay UE to perform layer 2 downlink routing and forwarding are described below.

In step 701, downlink data of the remote UE arrives in the base station, or the base station produces the data packet (including control plane signaling) which needs to be sent to the remote UE. The bae station needs to determine whether the data packet needs to be forwarded via the relay UE. If the data packet needs to be forwarded via the relay UE, the relay UE for forwarding the data packet needs to be determined.

The base station may negotiate with the remote UE at least one of: whether the relay UE is needed for forwarding, and which data of the EPS bearer is forwarded via the relay UE. The information may be determined and allocated by the base station to the remote UE, or may be determined and notified to the base station. If it is determined that the relay UE is needed for forwarding, the following steps are performed.

In step 702, the base station performs corresponding parsing on the data packet, and performs encapsulation corresponding to the air interface on the parsed data packet. In an exemplary embodiment, the Uu interface PDCP entity corresponding to the base station performs corresponding Uu PDCP layer processing.

In step 703, the data packet arrives in the relay AP, and corresponding adaptation layer processing is performed. The step 703 may include at least one of following operations.
1) The base station contains information for identifying at least one of the bearer to which the remote UE belongs and the bearer to which the data packet belongs in the adaptation layer header added for the data packet, where the information for identifying at least one of the bearer to which the remote UE belongs and the bearer to which the data packet belongs further includes one of:
   at least one of identification information of the remote UE and bearer identification information, where the identification information of the remote UE includes one of or a combination of: a C-RNTI, a D2D layer 2 identifier of the remote UE, an eNB UE X2 AP ID, an eNB UE S 1 AP ID, an index value of an identifier of the remote UE, and a new-defined UE identifier, and the bearer identification information includes one of or a combination of: an EPS bearer identifier, a radio bearer identifier, an E-RAB identifier, an S 1 bearer identifier, an LCID, a new-defined bearer identifier, and control plane signaling type indication information or user plane data type indication information; and
   b. information for identifying a combination of the remote UE and the bearer, such as the TEID. The bearer is the radio bearer, the S 1 bearer or the EPS bearer of the remote UE.
   In an exemplary embodiment, the information for identifying at least one of the bearer to which the remote UE belongs and the bearer to which to-be-sent uplink data belongs is allocated by the base station or the core network element.
2) The base station contains type indication information for indicating that the data packet is the data packet forwarded via the relay UE in the adaptation layer header added for the data packet.

In step 704, the base station maps the data packet to the corresponding bearer of the relay UE connected with the remote UE. The data packet is mapped to the corresponding bearer in at least one of following modes.
1) The base station determines the relayed UE connected with the remote UE, and maps the data packet to the bearer corresponding to the QCI of the relay UE connected with the remote UE according to the QCI of the bearer to which the data packet belongs.
2) The base station determines the relayed UE connected with the remote UE, and maps the data packet to the specific PDN connection or the bearer, for forwarding the data, of the relay UE connected with the remote UE.

In step 705, the base station performs at least one of PDCP layer processing and RLC layer processing on the data packet. In an exemplary embodiment, the base station contains type indication information for indicating that the data packet is the layer 2 relay or type indication information for indicating that the data packet is the data packet forwarded via the relay UE in at least one of the PDCP header and the RLC header added for the data packet.

In step 706, the relay UE performs corresponding layer 2 processing on the received data packet. The relay UE parses the received data packet, acquires information for identifying at least one of the bearer to which the remote UE belongs and the bearer to which the data packet belongs contained in the adaptation layer header, the PDCP or RLC of the data packet, and finds at least one of the corresponding remote UE and the corresponding bearer according to the information.

In step 707, the relay UE maps the data packet to the corresponding PC5 bearer. The data packet is mapped in one of following modes.
1) The relay UE maps the data packet to the PC5 bearer corresponding to the PPPP according to the QCI of the bearer to which the data packet belongs and the mapping relationship between the QCI and the PPPP.
2) The relay UE maps the data packet to the PC5 bearer corresponding to the QCI according to the QCI of the bearer to which the data packet belongs.
3) The relay UE maps the data packet to the PC5 bearer dedicated for forwarding the data according to the QCI of the bearer to which the data packet belongs.
4) The relay UE maps the data packet to the PC5 bearer dedicated for forwarding the data.
5) The relay UE maps the data packet to the PC5 bearer corresponding to the bearer to which the data packet belongs according to information of the bearer to which the data packet belongs.

In step 708, the relay UE performs corresponding layer 2 processing on the data packet, and sends the data packet to the corresponding remote UE via the corresponding PC5 bearer. In an exemplary embodiment, the relay UE contains at least one of following information in the relay adaptation layer header added for the data packet.
1) information for identifying the bearer to which the data packet belongs.
2) type indication information for indicating that the data packet is the data packet forwarded via the relay UE.

In an exemplary embodiment, the relay UE contains type indication information for indicating that the data packet is the data packet forwarded via the relay UE in at least one of the PC5 PDCP header, the PC5 RLC header and the PC5 MAC header added for the data packet.

In step 709, the remote UE performs corresponding parsing and layer 2 processing on the data packet received from the relay UE.

In step 710, the remote UE maps the data packet to the EPS bearer of the corresponding remote UE or the air interface bearer, and delivers the data packet to an upper layer for processing. The data packet is mapped in one of following modes.
1) The remote UE maps the received data packet to the EPS bearer or the air interface bearer corresponding to the identification information according to information for identifying the bearer to which the data packet belongs in one of the Uu PDCP header of the received data packet, the PC5 PDCP header of the received data packet and the PC5 RLC header of the received data packet.
2) The remote UE maps the data packet to the EPS bearer or the air interface bearer corresponding to the QCI value according to the QCI value of the PC5 bearer to which the data packet belongs.
3) The remote UE maps the data packet to the EPS bearer or the air interface bearer corresponding to the QCI value according to the PPPP value of the PC5 bearer to which the data packet belongs, and the correspondence between the PPPP value and the QCI value.
4) The remote UE maps the data packet to at least one of the radio bearer and the logical channel or the EPS bear corresponding to at least one of the PC5 bearer and the logical channel according to the mapping relationship between at least one the EPS bearer and the air interface bearer and at least of the corresponding PC5 bearer and the logical channel.

An embodiment of the present application further provides a computer-readable medium. In this embodiment, the computer-readable medium may be configured to store steps for executing the methods in the present application, which will not be repeated herein.

The computer-readable medium described above may include, but is not limited to, a USB flash disk, a read-only memory (ROM), a random access memory (RAM), a mobile hard disk, a magnetic disk, an optical disk or another medium capable of storing the program codes.

It should be understood by those skilled in the art that functional modules or units in all or part of the steps of the method, the system and the apparatus disclosed above may be implemented as software, firmware, hardware and appropriate combinations thereof. In the hardware implementation, the division of functional modules or units mentioned in the above description may not correspond to the division of physical components. For example, one physical component may have multiple functions, or one function or step may be executed jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read-only memory (EEPROM), a flash memory or other memory technologies, a compact disc-read only memory (CD-ROM), a digital versatile disc (DVD) or other optical disc storage, a magnetic cassette, a magnetic tape, a magnetic disk storage or other magnetic storage apparatuses, or any other medium used for storing desired information and accessed by a computer. In addition, as is known to those skilled in the art, the communication medium generally includes computer-readable instructions, data structures, program modules or other data in modulated data signals such as carriers or other transmission mechanisms, and may include any information delivery medium.

Although the embodiments disclosed by the present application are as described above, the content thereof is merely embodiments for facilitating the understanding of the present application and is not intended to limit the present application. Any person skilled in the art to which the present application pertains may make any modifications and variations in the implementation forms and details without departing from the scope disclosed by the present application, but the patent protection scope of the present application is still subject to the scope defined by the appended claims.

### INDUSTRIAL APPLICABILITY

The present application provides a routing method and equipment. The method for the bearer mapping and the data forwarding in the layer 2 is provided, so that the relay UE correctly performs the layer 2 data routing and forwarding, and the operator may effectively manage and control the remote UE, thereby improving the application of D2D technology.

## Claims

1. A routing method, comprising:
receiving (S20), by a relay user equipment, UE, a data packet from a remote UE; and
sending (S22), by the relay UE, the data packet to a base station by layer 2 data forwarding;
wherein the sending, by the relay UE, the data packet to a base station by layer 2 data forwarding comprises:
including, by the relay UE, information for identifying the remote UE and a bearer to which the data packet belongs in a relay adaptation layer header of the data packet;
wherein before the relay UE sends the data packet to the base station by layer 2 data forwarding, the method further comprises:
acquiring, by the relay UE, information for identifying the remote UE to which the data packet belongs, and information for identifying a radio bearer to which the data packet belongs;
wherein the relay UE acquires information for identifying the remote UE to which the data packet belongs, and information for identifying a radio bearer to which the data packet belongs in manner of:
acquiring information for identifying the remote UE and the bearer to which the data packet belongs, wherein the information is contained in an adaptation layer header of the data packet received from the remote UE;
wherein the information for identifying the remote UE and the bearer to which the data packet belongs comprises identification information of the remote UE and bearer identification information;
wherein the identification information of the remote UE comprises a new-defined UE identifier, and the bearer identification information comprises a radio bearer identifier.

2. The routing method according to claim 1,
wherein the sending, by the relay UE, the data packet to the base station by layer 2 data forwarding comprises: sending, by the relay UE, the data packet received from the remote UE to the base station over a bearer of the relay UE.

3. The routing method according to claim 1,
wherein the sending, by the relay UE, the data packet to the base station by layer 2 data forwarding comprises:
mapping, by the relay UE, the to-be-forwarded data packet sent by the remote UE to a packet data network, PDN, connection or a bearer of the relay UE, wherein the PDN connection and the bearer are dedicated for data forwarding; or
according to a ProSe per-packet priority, PPPP, value of a PC5 logical channel or a PC5 bearer corresponding to the data packet and a correspondence between the PPPP and a quality of service, QoS, class identifier, QCI, mapping, by the relay UE, the data packet to a bearer of the relay UE corresponding to the QCI; or
according to a QCI value of the PC5 bearer or the PC5 logical channel corresponding to the data packet, mapping, by the relay UE, the data packet to the bearer of the relay UE corresponding to the QCI.

4. The routing method according to claim 1,
wherein the sending, by the relay UE, the data packet to the base station by layer 2 data forwarding comprises: performing, by the relay UE, on the data packet received from the remote UE, PC5 interface layer 2 parsing, and Uu interface layer 2 processing or encapsulation,
wherein the PC5 interface layer 2 comprises one of or any combination of:
a PC5 media access control, MAC, layer, a PC5 radio link control, RLC, layer, and a relay adaptation layer;
wherein the Uu interface layer 2 comprises one of or any combination of:
a Uu MAC layer, a Uu RLC layer, and a relay adaptation layer.

5. The routing method according to claim 1,
wherein before the relay UE sends the data packet to the base station by layer 2 data forwarding, the method further comprises:
acquiring, by the relay UE, information for identifying an evolved packet system, EPS, bearer to which the data packet belongs, or an S1 bearer to which the data packet belongs.

6. The routing method according to claim 5, wherein the relay UE acquires information for identifying the EPS bearer, or the S 1 bearer to which the data packet belongs in one of or any combination of:
acquiring information for identifying the bearer to which the data packet belongs, wherein the information is contained in a PC5 PDCP header of the data packet, or a PC5 RLC header of the data packet, or a PC5 MAC header of the data packet;
acquiring the information for identifying the remote UE to which the data packet belongs from a source ProSe layer 2 identifier, ID, in a subheader of a PC5 interface MAC layer of the data packet received from the remote UE; and
acquiring at least one of a Uu radio bearer, the EPS bearer and the S1 bearer to which the data packet belongs according to a logical channel identifier in the subheader of the PC5 interface MAC layer of the data packet received from the remote UE and a mapping relationship between at least one of the PC5 bearer and the logical channel and at least one of the Uu radio bearer, the EPS bearer and the S 1 bearer.

7. The routing method according to claim 1,
wherein the identification information of the remote UE comprises one of or any combination of: a cell-radio network temporary identity, C-RNTI, a device-to-device, D2D, layer 2 identifier of the remote UE, an adaptation layer identifier of an X2 interface between the base station and the UE, eNB UE X2 AP ID, an adaptation layer identifier of an S 1 interface between the base station and the UE, eNB UE S1 AP ID, and an index value of an identifier of the remote UE; and wherein the bearer identification information comprises one of or any combination of: an EPS bearer identifier, an evolved-radio access bearer, E-RAB, identifier, an S 1 bearer identifier, a logical channel identify, LCID, a new-defined bearer identifier, control plane signaling type indication information, and user plane data type indication information;
or wherein the information for identifying remote UE and the bearer to which the data packet belongs comprises: information for identifying a combination of the remote UE and the bearer, wherein the bearer is a radio bearer, an S1 bearer or an EPS bearer of the remote UE.

8. A routing method, comprising:
performing (S30), by a remote UE, a layer 2 processing on a data packet to be sent; and
sending (S32), by the remote UE, the processed data packet to a relay UE;
wherein the performing, by the remote UE, a layer 2 processing on the data packet to be sent
comprises:
setting, by the remote UE, information for identifying remote UE and a bearer to which the data packet belongs in a relay adaptation layer header added to the data packet;
wherein the performing, by the remote UE, a layer 2 processing on a data packet to be sent comprises: performing, by a relay adaptation layer entity within the remote UE, relay adaptation layer processing or data encapsulation;
the method further comprising: mapping, by the remote UE, the data packet to a corresponding radio bearer of the remote UE;
wherein the mapping, by the remote UE, the data packet to a corresponding radio bearer of the remote UE comprises at least one of: according to identification information for identifying a bearer to which the data packet belongs in a relay adaptation layer of the received data packet, mapping, by the remote UE, the received data packet to the radio bearer of the remote UE corresponding to the identification information; and mapping, by the remote UE, the data packet to a Uu radio bearer corresponding to the PC5 bearer according to a mapping relationship between the Uu radio bearer and the PC 5 bearer in a UE context.

9. The routing method according to claim 8, wherein the performing, by the remote UE, the layer 2 processing on a data packet to be sent comprises one of or any combination of:
performing, by a Uu interface PDCP entity within the remote UE, PDCP layer processing or data encapsulation;
performing, by a Uu interface RLC entity within the remote UE, RLC layer processing or data encapsulation;
performing, by a PC5 PDCP layer entity within the remote UE, PC5 PDCP layer processing or data encapsulation;
performing, by a PC5 RLC layer entity within the remote UE, PC5 RLC layer processing or data encapsulation; and
performing, by a PC5 MAC layer entity within the remote UE, PC5 MAC layer processing or data encapsulation.

10. The routing method according to claim 8, wherein the sending, by the remote UE, the processed data packet comprises:
mapping, by the remote UE, the data packet to a PC5 bearer or a PC5 logical channel, and sending the data packet to a relay UE over the PC5 bearer or the PC5 logical channel.

11. The routing method according to claim 10, wherein the mapping, by the remote UE, the data packet to a PC5 bearer or a PC5 logical channel comprises:
according to a QoS class identifier, QCI, of an evolved packet system, EPS, bearer to which the data packet belongs and a mapping relationship between the QCI and a ProSe per-packet priority, PPPP, mapping, by the remote UE, the data packet to the PC5 bearer or the PC5 logical channel corresponding to the PPPP; or
according to the QCI of the EPS bearer to which the data packet belongs and a mapping relationship between a Uu interface QCI and a PC5 interface QCI, mapping, by the remote UE, the data packet to the PC5 bearer or the PC5 logical channel corresponding to the PC5 interface QCI; or
mapping, by the remote UE, according to the QCI of the EPS bearer to which the data packet belongs, the data packet to the PC5 bearer or the PC5 logical channel corresponding to the QCI; or
mapping, by the remote UE, the data packet to the PC5 bearer or the PC5 logical channel dedicated for data forwarding; or
mapping, by the remote UE, the data packet to the PC5 bearer or the PC5 logical channel corresponding to the EPS bearer to which the data packet belongs.

12. The routing method according to claim 8, wherein the performing, by the remote UE, a layer 2 processing on a data packet to be sent comprises: setting, by the remote UE, information for identifying remote UE and a bearer to which the data packet belongs in the PC5 PDCP header added to the data packet, or the PC5 RLC header added to the data packet, or the PC5 MAC header added to the data packet.

13. The routing method according to claim 8, further comprising:
receiving, by the remote UE, a data packet sent by a relay UE through layer 2 data forwarding; and
mapping, by the remote UE, the data packet to at least one of a corresponding logical channel and a corresponding EPS bearer of the remote UE.

14. The routing method according to claim 13, wherein the mapping, by the remote UE, the data packet to at least one of a corresponding radio bearer and a corresponding logical channel or a corresponding EPS bearer of the remote UE comprises at least one of:
according to identification information for identifying a bearer to which the data packet belongs in a Uu RLC header, or a PC5 PDCP layer, or a PC5 RLC layer, or a PC5 MAC layer, or a Uu PDCP layer of the received data packet, mapping, by the remote UE, the received data packet to at least one of the radio bearer and the logical channel or the EPS bearer of the remote UE corresponding to the identification information,
according to a QCI value of the PC5 bearer or logical channel to which the data packet belongs, mapping, by the remote UE, the data packet to at least one of the radio bearer and the logical channel or the EPS bearer corresponding to the QCI value;
according to a PPPP value of the PC5 bearer or logical channel to which the data packet belongs and a correspondence between the PPPP value and a QCI value, mapping, by the remote UE, the data packet to at least one of the radio bearer and the logical channel or the EPS bearer corresponding to the QCI value; and
mapping, by the remote UE, the data packet to the EPS bearer corresponding to logical channel according to a mapping relationship between the EPS bearer and logical channel in a UE context.

15. A terminal, comprising a memory, a processor and a routing program stored in the memory and executable by the processor, wherein the routing program, when executed by the processor, implements the routing method any one of claims 1-7 or the routing method of any one of claims 8-14.

## Patentansprüche

1. Routingverfahren, Folgendes umfassend:
Empfangen (S20), durch eine Relais-Benutzerausrüstung (user equipment - UE), eines Datenpakets von einer entfernten UE; und Senden (S22), durch die Relais-UE, des Datenpakets an eine Basisstation durch Layer-2-Datenweiterleitung;
wobei das Senden, durch die Relais-UE, des Datenpakets an eine Basisstation durch Layer-2-Datenweiterleitung Folgendes umfasst:
Einfügen, durch die Relais-UE, von Informationen zum Identifizieren der entfernten UE und eines Trägers, zu dem das Datenpaket gehört, in einen Relaisanpassungslayerheader des Datenpakets;
wobei das Verfahren, bevor die Relais-UE das Datenpaket durch Layer-2-Datenweiterleitung an die Basisstation sendet, ferner Folgendes umfasst:
Erfassen, durch die Relais-UE, von Informationen zum Identifizieren der entfernten UE, zu der das Datenpaket gehört, und von Informationen zum Identifizieren eines Funkträgers, zu dem das Datenpaket gehört,
wobei die Relais-UE Informationen zum Identifizieren der entfernten UE, zu der das Datenpaket gehört, und Informationen zum Identifizieren eines Funkträgers, zu dem das Datenpaket gehört, auf folgende Weise erfasst:
Erfassen von Informationen zum Identifizieren der entfernten UE und des Trägers, zu dem das Datenpaket gehört, wobei die Informationen in einem Anpassungslayerheader des von der entfernten UE empfangenen Datenpakets enthalten sind;
wobei die Informationen zum Identifizieren der entfernten UE und des Trägers, zu dem das Datenpaket gehört, Identifikationsinformationen der entfernten UE und Trägeridentifikationsinformationen umfassen;
wobei die Identifikationsinformationen der entfernten UE eine neu definierte UE-Kennung umfassen und die Trägeridentifikationsinformationen eine Funkträgeridentifikation umfassen.

2. Routingverfahren nach Anspruch 1,
wobei das Senden, durch die Relais-UE, des Datenpakets an die Basisstation durch Layer-2-Datenweiterleitung Folgendes umfasst: Senden, durch die Relais-UE, des von der entfernten UE empfangenen Datenpakets an die Basisstation über einen Träger der Relais-UE.

3. Routingverfahren nach Anspruch 1,
wobei das Senden, durch die Relais-UE, des Datenpakets an die Basisstation durch Layer-2-Datenweiterleitung Folgendes umfasst:
Zuordnen, durch die Relais-UE, des weiterzuleitenden Datenpakets, das durch die entfernte UE gesendet wurde, zu einer Paketdatennetzwerk(PDN)-Verbindung oder einem Träger der Relais-UE, wobei die PDN-Verbindung und der Träger für die Datenweiterleitung vorgesehen sind; oder
gemäß einem ProSa-Pro-Paket-Prioritäts(PPPP)-Wert eines logischen PC5-Kanals oder eines PC5-Trägers, der dem Datenpaket entspricht, und einer Entsprechung zwischen der PPPP und einer Dienstqualitäts(quality of service - QoS)-Klassenkennung (QoS class identifier - QCI) Zuordnen, durch die Relais-UE, des Datenpakets zu einem Träger der Relais-UE, der der QCI entspricht; oder
gemäß einem QCI-Wert des PC5-Trägers oder des logischen PC5-Kanals, der dem Datenpaket entspricht, Zuordnen, durch die Relais-UE, des Datenpakets zu dem Träger der Relais-UE, der der QCI entspricht.

4. Routingverfahren nach Anspruch 1,
wobei das Senden, durch die Relais-UE, des Datenpakets an die Basisstation durch Layer-2-Datenweiterleitung Folgendes umfasst:
Durchführen, durch die Relais-UE, an dem von der entfernten UE empfangenen Datenpaket, von PC5-Schnittstellenlayer-2-Parsing und Uu-Schnittstellenlayer-2-Verarbeitung oder Verkapselung,
wobei der PC5-Schnittstellenlayer 2 eines von Folgendem oder eine beliebige Kombination von Folgendem umfasst:
einen PC5-Medienzugriffssteuerungs(media access control - MAC)-Layer, einen PC5-Funkverbindungssteuerungs(radio link control - RLC)-Layer und einen Relaisanpassungslayer;
wobei der Uu-Schnittstellenlayer 2 eines von Folgendem oder eine beliebige Kombination von Folgendem umfasst:
einen Uu-MAC-Layer, einen Uu-RLC-Layer und einen Relaisanpassungslayer.

5. Routingverfahren nach Anspruch 1,
wobei das Verfahren, bevor die Relais-UE das Datenpaket durch Layer-2-Datenweiterleitung an die Basisstation sendet, ferner Folgendes umfasst:
Erfassen, durch die Relais-UE, von Informationen zum Identifizieren eines EPS(evolved packet system)-Trägers, zu dem das Datenpaket gehört, oder eines S1-Trägers, zu dem das Datenpaket gehört.

6. Routingverfahren nach Anspruch 5, wobei die Relais-UE Informationen zum Identifizieren des EPS-Trägers oder des S1-Trägers, zu dem das Datenpaket gehört, in einem von Folgendem oder einer beliebigen Kombination von Folgendem erfasst:
Erfassen von Informationen zum Identifizieren des Trägers, zu dem das Datenpaket gehört, wobei die Informationen in einem PC5-PDCP-Header des Datenpakets oder einem PC5-RLC-Header des Datenpakets oder einem PC5-MAC-Header des Datenpakets enthalten sind;
Erfassen der Informationen zum Identifizieren der entfernten UE, zu der das Datenpaket gehört, von einer Quell-ProSe-Layer-2-Kennung (ID) in einem Subheader eines PC5-Schnittstellen-MAC-Layers des von der entfernten UE empfangenen Datenpakets; und Erfassen von mindestens einem von einem Uu-Funkträger, dem EPS-Träger und dem S1-Träger, zu dem das Datenpaket gehört, gemäß einer Kennung des logischen Kanals in dem Subheader des PC5-Schnittstellen-MAC-Layers des von der entfernten UE empfangenen Datenpakets und einer Zuordnungsbeziehung zwischen mindestens einem von dem PC5-Träger und dem logischen Kanal und mindestens einem von dem Uu-Funkträger, dem EPS-Träger und dem S1-Träger.

7. Routingverfahren nach Anspruch 1,
wobei die Identifikationsinformationen der entfernten UE eines von Folgendem oder eine beliebige Kombination von Folgendem umfassen:
eine temporäre Zellfunknetz-Identität (cell-radio network temporary identity - C-RNTI), eine Vorrichtung-zu-Vorrichtung(device-to-device - D2D)-Layer-2-Kennung der entfernten UE, eine Anpassungslayerkennung einer X2-Schnittstelle zwischen der Basisstation und der UE (eNB-UE-X2-AP-ID), eine Anpassungslayerkennung einer S1-Schnittstelle zwischen der Basisstation und der UE (eNB-UE-S1-AP-ID) und ein Indexwert einer Kennung der entfernten UE, und wobei die Trägeridentifikationsinformationen eines von Folgendem oder eine beliebige Kombination von Folgendem umfassen: eine EPS-Trägerkennung, eine E-RAB(evolved radio access bearer)-Kennung, eine S1-Trägerkennung, eine Kennung des logischen Kanals (logical channel identify - LCID), eine neu definierte Trägerkennung, Informationen zum Signalisierungstyp der Steuerebene und Informationen zum Datentyp der Benutzerebene;
oder wobei die Informationen zum Identifizieren der entfernten UE und des Trägers, zu dem das Datenpaket gehört, Folgendes umfassen: Informationen zum Identifizieren einer Kombination der entfernten UE und des Trägers, wobei der Träger ein Funkträger, ein S1-Träger oder ein EPS-Träger der entfernten UE ist.

8. Routingverfahren, Folgendes umfassend:
Durchführen (S30), durch eine entfernte UE, einer Layer-2-Verarbeitung an einem zu sendenden Datenpaket; und
Senden (S32), durch die entfernte UE, des verarbeiteten Datenpakets an eine Relais-UE;
wobei das Durchführen, durch die entfernte UE, einer Layer-2-Verarbeitung an dem zu sendenden Datenpaket Folgendes umfasst:
Festlegen, durch die entfernte UE, von Informationen zum Identifizieren von entfernten UE und eines Trägers, zu dem das Datenpaket gehört, in einem Relaisanpassungslayerheader, der dem Datenpaket hinzugefügt wurde;
wobei das Durchführen, durch die entfernte UE, einer Layer-2-Verarbeitung an einem zu sendenden Datenpaket Folgendes umfasst: Durchführen, durch eine Relaisanpassungslayerentität innerhalb der entfernten UE, einer Relaisanpassungslayerverarbeitung oder Datenverkapselung;
wobei das Verfahren ferner Folgendes umfasst: Zuordnen, durch die entfernte UE, des Datenpakets zu einem entsprechenden Funkträger der entfernten UE;
wobei das Zuordnen, durch die entfernte UE, des Datenpakets zu einem entsprechenden Funkträger der entfernten UE mindestens eines von Folgendem umfasst: gemäß Identifikationsinformationen zum Identifizieren eines Trägers, zu dem das Datenpaket gehört, in einem Relaisanpassungslayer des empfangenen Datenpakets, Zuordnen, durch die entfernte UE, des empfangenen Datenpakets zu dem Funkträger der entfernten UE, die den Identifikationsinformationen entspricht; und Zuordnen, durch die entfernte UE, des Datenpakets zu einem Uu-Funkträger, der dem PC5-Träger entspricht, gemäß einer Zuordnungsbeziehung zwischen dem Uu-Funkträger und dem PC5-Träger in einem UE-Kontext.

9. Routingverfahren nach Anspruch 8, wobei das Durchführen, durch die entfernte UE, der Layer-2-Verarbeitung an einem zu sendenden Datenpaket eines von Folgendem oder eine beliebige Kombination von Folgendem umfasst:
Durchführen, durch eine Uu-Schnittstellen-PDCP-Entität innerhalb der entfernten UE, einer PDCP-Layerverarbeitung oder Datenverkapselung;
Durchführen, durch eine Uu-Schnittstellen-RLC-Entität innerhalb der entfernten UE, einer RLC-Layerverarbeitung oder Datenverkapselung;
Durchführen, durch eine PC5-PDCP-Layerentität innerhalb der entfernten UE, einer PC5-PDCP-Layerverarbeitung oder Datenverkapselung;
Durchführen, durch eine PC5-RLC-Layerentität innerhalb der entfernten UE, einer PC5-RLC-Layerverarbeitung oder Datenverkapselung; und
Durchführen, durch eine PC5-MAC-Layerentität innerhalb der entfernten UE, einer PC5-MAC-Layerverarbeitung oder Datenverkapselung.

10. Routingverfahren nach Anspruch 8, wobei das Senden, durch die entfernte UE, des verarbeiteten Datenpakets Folgendes umfasst:
Zuordnen, durch die entfernte UE, des Datenpakets zu einem PC5-Träger oder einem logischen PC5-Kanal und Senden des Datenpakets zu einer Relais-UE über den PC5-Träger oder den logischen PC5-Kanal.

11. Routingverfahren nach Anspruch 10, wobei das Zuordnen, durch die entfernte UE, des Datenpakets zu einem PC5-Träger oder einem logischen PC5-Kanal Folgendes umfasst:
gemäß einer QoS-Klassenkennung (QCI) eines EPS(evolved packet system)-Trägers, zu dem das Datenpaket gehört, und einer Zuordnungsbeziehung zwischen der QCI und einer ProSa-Pro-Paket-Priorität (PPPP) Zuordnen, durch die entfernte UE, des Datenpakets zu dem PC5-Träger oder dem logischen PC5-Kanal, der der PPPP entspricht; oder
gemäß der QCI des EPS-Trägers, zu dem das Datenpaket gehört, und einer Zuordnungsbeziehung zwischen einer Uu-Schnittstelle-QCI und einer PC5-Schnittstelle-QCI, Zuordnen, durch die entfernte UE, des Datenpakets zu dem PC5-Träger oder dem logischen PC5-Kanal, der der PC5-Schnittstelle-QCI entspricht; oder
Zuordnen, durch die entfernte UE, gemäß der QCI des EPS-Trägers, zu dem das Datenpaket gehört, des Datenpakets zu dem PC5-Träger oder dem logischen PC5-Kanal, der der QCI entspricht; oder
Zuordnen, durch die entfernte UE, des Datenpakets zu dem PC5-Träger oder dem logischen PC5-Kanal, der für die Datenweiterleitung vorgesehen ist; oder
Zuordnen, durch die entfernte UE, des Datenpakets zu dem PC5-Träger oder dem logischen PC5-Kanal, der dem EPS-Träger entspricht, zu dem das Datenpaket gehört.

12. Routingverfahren nach Anspruch 8, wobei das Durchführen, durch die entfernte UE, einer Layer-2-Verarbeitung an einem zu sendenden Datenpaket Folgendes umfasst:
Festlegen, durch die entfernte UE, von Informationen zum Identifizieren von entfernten UE und eines Trägers, zu dem das Datenpaket gehört, in dem PC5-PDCP-Header, der dem Datenpaket hinzugefügt wurde, oder dem PC5-RLC-Header, der dem Datenpaket hinzugefügt wurde, oder dem PC5-MAC-Header, der dem Datenpaket hinzugefügt wurde.

13. Routingverfahren nach Anspruch 8, ferner Folgendes umfassend:
Empfangen, durch die entfernte UE, eines Datenpakets, das durch eine Relais-UE über Layer-2-Datenweiterleitung gesendet wurde; und
Zuordnen, durch die entfernte UE, des Datenpakets zu mindestens einem von einem entsprechenden logischen Kanal und einem entsprechenden EPS-Träger der entfernten UE.

14. Routingverfahren nach Anspruch 13, wobei das Zuordnen des Datenpakets durch die entfernte UE zu mindestens einem von einem entsprechenden Funkträger und einem entsprechenden logischen Kanal oder einem entsprechenden EPS-Träger der entfernten UE mindestens eines von Folgendem umfasst:
gemäß Identifikationsinformationen zum Identifizieren eines Trägers, zu dem das Datenpaket gehört, in einem Uu-RLC-Header oder einem PC5-PDCP-Layer oder einem PC5-RLC-Layer oder einem PC5-MAC-Layer oder einem Uu-PDCP-Layer des empfangenen Datenpakets, Zuordnen, durch die entfernte UE, des empfangenen Datenpakets zu mindestens einem von dem Funkträger und dem logischen Kanal oder dem EPS-Träger der entfernten UE, der den Identifikationsinformationen entspricht,
gemäß einem QCI-Wert des PC5-Trägers oder logischen Kanals, zu dem das Datenpaket gehört, Zuordnen, durch die entfernte UE, des Datenpakets zu mindestens einem von dem Funkträger und dem logischen Kanal oder dem EPS-Träger, der dem QCI-Wert entspricht; gemäß einem PPPP-Wert des PC5-Trägers oder logischen Kanals, zu dem das Datenpaket gehört, und einer Entsprechung zwischen dem PPPP-Wert und einem QCI-Wert, Zuordnen, durch die entfernte UE, des Datenpakets zu mindestens einem von dem Funkträger und dem logischen Kanal oder dem EPS-Träger, der dem QCI-Wert entspricht; und
Zuordnen, durch die entfernte UE, des Datenpakets zu dem EPS-Träger, der dem logischen Kanal entspricht, gemäß einer Zuordnungsbeziehung zwischen dem EPS-Träger und dem logischen Kanal in einem UE-Kontext.

15. Endgerät, umfassend einen Speicher, einen Prozessor und ein im Speicher gespeichertes und durch den Prozessor ausführbares Routingprogramm, wobei das Routingprogramm, wenn es durch den Prozessor ausgeführt wird, das Routingverfahren nach einem der Ansprüche 1-7 oder das Routingverfahren nach einem der Ansprüche 8-14 implementiert.

## Revendications

1. Procédé de routage, comprenant :
la réception (S20), par un équipement utilisateur, UE, relais, d'un paquet de données provenant d'un UE distant ; et
l'envoi (S22), par l'UE relais, du paquet de données à une station de base par transfert de données de couche 2 ;
dans lequel l'envoi, par l'UE relais, du paquet de données à une station de base par transfert de données de couche 2 comprend :
l'inclusion, par l'UE relais, d'informations permettant d'identifier l'UE distant et un support auquel appartient le paquet de données dans un en-tête de couche d'adaptation de relais du paquet de données ;
dans lequel avant que l'UE relais n'envoie le paquet de données à la station de base par transfert de données de couche 2, le procédé comprend également :
l'acquisition, par l'UE relais, d'informations permettant d'identifier l'UE distant auquel appartient le paquet de données, et d'informations permettant d'identifier un support radio auquel appartient le paquet de données ;
dans lequel l'UE relais acquiert des informations permettant d'identifier l'UE distant auquel appartient le paquet de données, et des informations permettant d'identifier un support radio auquel appartient le paquet de données de la manière suivante :
l'acquisition d'informations permettant d'identifier l'UE distant et le support auquel appartient le paquet de données, dans lequel les informations sont contenues dans un en-tête de couche d'adaptation du paquet de données reçu de l'UE distant ; dans lequel les informations permettant d'identifier l'UE distant et le support auquel appartient le paquet de données comprend des informations d'identification de l'UE distant et des informations d'identification de support ;
dans lequel les informations d'identification de l'UE distant comprennent un nouvel identifiant d'UE défini, et les informations d'identification de support comprennent un identifiant de support radio.

2. Procédé de routage selon la revendication 1,
dans lequel l'envoi, par l'UE relais, du paquet de données à la station de base par transfert de données de couche 2 comprend : l'envoi, par l'UE relais, du paquet de données reçu de l'UE distant à la station de base via un support de l'UE relais.

3. Procédé de routage selon la revendication 1,
dans lequel l'envoi, par l'UE relais, du paquet de données à la station de base par transfert de données de couche 2 comprend :
le mappage, par l'UE relais, du paquet de données à transmettre envoyé par l'UE distant à une connexion de réseau de données par paquets, PDN, ou un support de l'UE relais, dans lequel la connexion PDN et le support sont dédiés au transfert de données ; ou
selon une valeur de priorité ProSe par paquet, PPPP, d'un canal logique PC5 ou d'un support PC5 correspondant au paquet de données et d'une correspondance entre le PPPP et un mappage d'identifiant de classe de qualité de service, QoS, QCI, par le relais UE, du paquet de données au support de l'UE relais correspondant au QCI ; ou
selon une valeur QCI du support PC5 ou du canal logique PC5 correspondant au paquet de données, le mappage, par l'UE relais, du paquet de données au support de l'UE relais correspondant au QCI.

4. Procédé de routage selon la revendication 1,
dans lequel l'envoi, par l'UE relais, du paquet de données à la station de base par transfert de données de couche 2 comprend :
la réalisation, par l'UE relais, sur le paquet de données reçu de l'UE distant, d'une analyse de couche 2 d'interface PC5 et d'un traitement ou d'une encapsulation de couche 2 d'interface Uu,
dans lequel la couche 2 d'interface PC5 comprend l'une ou toute combinaison :
d'une couche de commande d'accès au support, MAC, PC5, d'une couche de commande de liaison radio, RLC, PC5 et d'une couche d'adaptation de relais ;
dans lequel la couche 2 d'interface Uu comprend l'une ou toute combinaison :
d'une couche MAC Uu, d'une couche RLC Uu et d'une couche d'adaptation de relais.

5. Procédé de routage selon la revendication 1,
dans lequel avant que l'UE relais n'envoie le paquet de données à la station de base par transfert de données de couche 2, le procédé comprend également :
l'acquisition, par l'UE relais, d'informations permettant d'identifier un support de système de paquets évolué, EPS,
auquel appartient le paquet de données, ou un support S1 auquel appartient le paquet de données.

6. Procédé de routage selon la revendication 5, dans lequel l'UE relais acquiert des informations permettant d'identifier le support EPS, ou le support S1 auquel appartient le paquet de données dans l'une ou toute combinaison des éléments suivants :
l'acquisition d'informations permettant d'identifier le support auquel appartient le paquet de données, dans lequel les informations sont contenues dans un en-tête PDCP PC5 du paquet de données, ou un en-tête RLC PC5 du paquet de données, ou un en-tête MAC PC5 du paquet de données ;
l'acquisition des informations permettant d'identifier l'UE distant auquel appartient le paquet de données à partir d'un identifiant, ID, source ProSe de couche 2, dans un sous-en-tête d'une couche MAC d'interface PC5 du paquet de données reçu de l'UE distant ; et
l'acquisition d'au moins un support parmi un support radio Uu, le support EPS et le support S1 auquel appartient le paquet de données selon un identifiant de canal logique dans le sous-en-tête de la couche MAC d'interface PC5 du paquet de données reçu de l'UE distant et une relation de mappage entre au moins l'un parmi le support PC5 et le canal logique et au moins l'un parmi le support radio Uu, le support EPS et le support S1.

7. Procédé de routage selon la revendication 1,
dans lequel les informations d'identification de l'UE distant comprennent l'une ou toute combinaison :
d'une identité temporaire de réseau radio cellulaire, C-RNTI, d'un identifiant de couche 2 de dispositif à dispositif, D2D, de l'UE distant, d'un identifiant de couche d'adaptation d'une interface X2 entre la station de base et l'UE, eNB UE X2 AP ID, d'un identifiant de couche d'adaptation d'une interface S1 entre la station de base et l'UE, eNB UE S1 AP ID, et d'une valeur d'index d'un identifiant de l'UE distant ; et dans lequel les informations d'identification de support comprennent l'un ou toute combinaison : d'un identifiant de support EPS, d'un identifiant de support d'accès radio évolué, E-RAB, d'un identifiant de support S1, d'une identification de canal logique, LCID, d'un nouvel identifiant de support défini, des informations d'indication de type de signalisation de plan de commande et des informations d'indication de type de données de plan utilisateur ;
ou dans lequel les informations permettant d'identifier l'UE distant et le support auquel appartient le paquet de données comprennent : des informations permettant d'identifier une combinaison de l'UE distant et du support, dans lequel le support est un support radio, un support S1 ou un support EPS de l'UE distant.

8. Procédé de routage, comprenant :
la réalisation (S30), par un UE distant, d'un traitement de couche 2 sur un paquet de données à envoyer ; et
l'envoi (S32), par l'UE distant, du paquet de données traité à un UE relais ;
dans lequel la réalisation, par l'UE distant, d'un traitement de couche 2 sur le paquet de données à envoyer comprend :
le paramétrage, par l'UE distant, des informations permettant d'identifier l'UE distant et un support auquel appartient le paquet de données dans un en-tête de couche d'adaptation de relais ajouté au paquet de données ;
dans lequel la réalisation, par l'UE distant, d'un traitement de couche 2 sur un paquet de données à envoyer comprend : la réalisation, par une entité de couche d'adaptation de relais au sein de l'UE distant, d'un traitement de couche d'adaptation de relais ou d'une encapsulation de données ;
le procédé comprenant également : le mappage, par l'UE distant, du paquet de données à un support radio correspondant de l'UE distant ;
dans lequel le mappage, par l'UE distant, du paquet de données à un support radio correspondant de l'UE distant comprend au moins l'un des éléments suivants : selon des informations d'identification permettant d'identifier un support auquel appartient le paquet de données dans une couche d'adaptation de relais du paquet de données reçu, le mappage, par l'UE distant, du paquet de données reçu au support radio de l'UE distant correspondant aux informations d'identification ; et le mappage, par l'UE distant, du paquet de données à un support radio Uu correspondant au support PC5 selon une relation de mappage entre le support radio Uu et le support PC5 dans un contexte UE.

9. Procédé de routage selon la revendication 8, dans lequel la réalisation, par l'UE distant, du traitement de couche 2 sur un paquet de données à envoyer comprend l'un ou toute combinaison des éléments suivants :
la réalisation, par une entité PDCP d'interface Uu au sein de l'UE distant, d'un traitement de couche PDCP ou d'une encapsulation de données ;
la réalisation, par une entité RLC d'interface Uu au sein de l'UE distant, d'un traitement de couche RLC ou d'une encapsulation de données ;
la réalisation, par une entité de couche PDCP PC5 au sein de l'UE distant, d'un traitement de couche PDCP PC5 ou d'une encapsulation de données ;
la réalisation, par une entité de couche RLC PC5 au sein de l'UE distant, d'un traitement de couche RLC PC5 ou d'une encapsulation de données ; et
la réalisation, par une entité de couche MAC PC5 au sein de l'UE distant, d'un traitement de couche MAC PC5 ou d'une encapsulation de données.

10. Procédé de routage selon la revendication 8, dans lequel l'envoi, par l'UE distant, du paquet de données traité comprend :
le mappage, par l'UE distant, du paquet de données à un support PC5 ou un canal logique PC5, et l'envoi du paquet de données à un UE relais sur le support PC5 ou le canal logique PC5.

11. Procédé de routage selon la revendication 10, dans lequel le mappage, par l'UE distant, du paquet de données vers un support PC5 ou un canal logique PC5 comprend :
selon un identifiant de classe QoS, QCI, d'un support de système de paquets évolué, EPS, auquel appartient le paquet de données et une relation de mappage entre le QCI et une priorité ProSe par paquet, PPPP, le mappage, par l'UE distant, du paquet de données au support PC5 ou au canal logique PC5 correspondant au PPPP ; ou
selon le QCI du support EPS auquel appartient le paquet de données et d'une relation de mappage entre un QCI d'interface Uu et un QCI d'interface PC5, le mappage, par l'UE distant, du paquet de données au support PC5 ou au canal logique PC5 correspondant au QCI d'interface PC5 ; ou
le mappage, par l'UE distant, selon le QCI du support EPS auquel appartient le paquet de données, du paquet de données au support PC5 ou au canal logique PC5 correspondant au QCI ; ou
le mappage, par l'UE distant, du paquet de données au support PC5 ou au canal logique PC5 dédié au transfert de données ; ou le mappage, par l'UE distant, du paquet de données au support PC5 ou au canal logique PC5 correspondant au support EPS auquel appartient le paquet de données.

12. Procédé de routage selon la revendication 8, dans lequel la réalisation, par l'UE distant, d'un traitement de couche 2 sur un paquet de données à envoyer comprend :
le paramétrage, par l'UE distant, des informations permettant d'identifier l'UE distant et un support auquel appartient le paquet de données dans l'en-tête PDCP PC5 ajouté au paquet de données, ou l'en-tête RLC PC5 ajouté au paquet de données, ou l'en-tête MAC PC5 ajouté au paquet de données.

13. Procédé de routage selon la revendication 8, comprenant également :
la réception, par l'UE distant, d'un paquet de données envoyé par un UE relais via un transfert de données de couche 2 ; et
le mappage, par l'UE distant, du paquet de données vers au moins l'un parmi un canal logique correspondant et
un support EPS correspondant de l'UE distant.

14. Procédé de routage selon la revendication 13, dans lequel le mappage, par l'UE distant, du paquet de données vers au moins l'un parmi un support radio correspondant et un canal logique correspondant ou un support EPS correspondant de l'UE distant comprend au moins l'un des éléments suivants :
selon des informations d'identification permettant d'identifier un support auquel appartient le paquet de données dans un en-tête RLC Uu, ou une couche PDCP PC5, ou une couche RLC PC5, ou
une couche MAC PC5, ou une couche PDCP Uu du paquet de données reçu, le mappage, par l'UE distant, du paquet de données reçu vers au moins l'un parmi le support radio et le canal logique ou le support EPS de l'UE distant correspondant aux informations d'identification,
selon une valeur QCI du support PC5 ou du canal logique auquel appartient le paquet de données, le mappage, par l'UE distant, du paquet de données vers au moins l'un parmi le support radio et le canal logique ou le support EPS correspondant à la valeur QCI ;
selon une valeur PPPP du support PC5 ou du canal logique auquel appartient le paquet de données et une correspondance entre la valeur PPPP et une valeur QCI, le mappage, par l'UE distant, du paquet de données vers au moins l'un parmi le support radio et le canal logique ou le support EPS correspondant à la valeur QCI ; et
le mappage, par l'UE distant, du paquet de données au support EPS correspondant au canal logique selon une relation de mappage entre le support EPS et le canal logique dans un contexte UE.

15. Terminal, comprenant une mémoire, un processeur et un programme de routage stocké dans la mémoire et exécutable par le processeur, dans lequel le programme de routage, lorsqu'il est exécuté par le processeur, met en œuvre le procédé de routage selon l'une quelconque des revendications 1 à 7 ou le procédé de routage selon l'une quelconque des revendications 8 à 14.
